(19) Europäisches Patentamt
European Patent Office
Office européen des brevets

(11) **EP 4 406 632 A1**

(12) **EUROPEAN PATENT APPLICATION**
published in accordance with Art. 153(4) EPC

(43) Date of publication:
**31.07.2024 Bulletin 2024/31**

(21) Application number: **22897875.5**

(22) Date of filing: **24.11.2022**

(51) International Patent Classification (IPC):
**A63F 13/52** (2014.01)     **G06T 15/00** (2011.01)

(52) Cooperative Patent Classification (CPC):
**A63F 13/52; G06F 9/451; G06T 15/00**

(86) International application number:
**PCT/CN2022/133959**

(87) International publication number:
**WO 2023/093792 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.11.2021 CN 202111424170**

(71) Applicant: **Huawei Technologies Co., Ltd.
Shenzhen, Guangdong 518129 (CN)**

(72) Inventors:
• **ZHENG, Tianji
  Shenzhen, Guangdong 518129 (CN)**
• **YANG, Chengyun
  Shenzhen, Guangdong 518129 (CN)**
• **WU, Jiangzheng
  Shenzhen, Guangdong 518129 (CN)**
• **FENG, Shaobo
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **IMAGE FRAME RENDERING METHOD AND RELATED APPARATUS**

(57)     This application discloses an image frame rendering method, applied to an electronic device that performs image frame rendering. The method in this application includes: obtaining a first rendering instruction, where the first rendering instruction instructs to render a first target image frame; obtaining a first image frame and a second image frame based on the first rendering instruction, where the first image frame is a previous frame of the second image frame, and the second image frame is a previous frame of the first target image frame; and if a similarity between the first image frame and the second image frame is greater than or equal to a first threshold, obtaining the first target image frame based on the second image frame, where content of the first target image frame is the same as content of the second image frame. According to this solution, a frame rate of an image frame obtained through rendering can be ensured, and rendering power consumption of the electronic device can be reduced.

300

Obtain a first rendering instruction, where the first rendering instruction instructs to render a first target image frame — 301

Obtain a first image frame and a second image frame based on the first rendering instruction, where the first image frame is a previous frame of the second image frame, and the second image frame is a previous frame of the first target image frame — 302

If a similarity between the first image frame and the second image frame is greater than or equal to a first threshold, obtain the first target image frame based on the second image frame, where content of the first target image frame is the same as content of the second image frame — 303

FIG. 3

## Description

This application claims priority to Chinese Patent Application No. 202111424170.9, filed with the China National Intellectual Property Administration on November 26, 2021 and entitled "IMAGE FRAME RENDERING METHOD AND RELATED APPARATUS", which is incorporated herein by reference in its entirety.

## TECHNICAL FIELD

This application relates to the field of computer technologies, and in particular, to an image frame rendering method and a related apparatus.

## BACKGROUND

Rapid development of mobile terminals and the mobile Internet brings great convenience to people's life. Emergence of mobile phone games enriches people's entertainment life. People can turn on mobile phones anytime and anywhere, enter a virtual game world, and play games. With development of the times, players have a stronger call for high-quality and high-frame-rate games. To meet requirements of players, mobile phone manufacturers also make continuous efforts to improve hardware performance, so that mobile phones with high refresh rate screens emerge one after another.

Currently, due to the popularity of mobile phones with high refresh rate screens, game manufacturers increase game frame rates to adapt to high refresh rates. After the game frame rates are increased, although game smoothness can be well improved, a large quantity of rendered frames are wasted and power consumption of a mobile phone is excessively high. As a result, the mobile phone is seriously hot and battery life of the mobile phone is affected.

Therefore, currently there is an urgent need for a method that can reduce rendering power consumption of a mobile phone while ensuring a game frame rate.

## SUMMARY

This application provides an image frame rendering method, to reduce rendering power consumption of an electronic device while ensuring a frame rate of an image frame obtained through rendering.

A first aspect of this application provides an image frame rendering method, applied to an electronic device that performs image frame rendering. The method includes the following steps. A first rendering instruction is obtained, where the first rendering instruction instructs to render a first target image frame. The first rendering instruction may be intercepted by an instruction reordering layer in the electronic device. In a process in which the electronic device runs an application program, the application program initiates the first rendering instruction to instruct hardware in the electronic device to perform a rendering operation. The instruction reordering layer in the electronic device may intercept the first rendering instruction before the first rendering instruction reaches the hardware that is in the electronic device and that performs the rendering operation.

A first image frame and a second image frame are obtained based on the first rendering instruction, where the first image frame is a previous frame of the second image frame, and the second image frame is a previous frame of the first target image frame. The first image frame and the second image frame are rendered image frames. The first image frame and the second image frame are image frames rendered before the first rendering instruction is obtained. In addition, the first image frame, the second image frame, and the first target image frame that is instructed by the first rendering instruction are three continuous image frames.

If a similarity between the first image frame and the second image frame is greater than or equal to a first threshold, the first target image frame is obtained based on the second image frame, where content of the first target image frame is the same as content of the second image frame. That is, the electronic device may copy the second image frame obtained through rendering, and use a copy of the second image frame as the first target image frame, so that the second image frame and the first target image frame that are continuously displayed on the electronic device are two frames with same content.

In this solution, if a similarity between two adjacent rendered image frames is high, a next image frame in the two image frames is multiplexed instead of rendering a new image frame, so that an image frame that needs to be rendered by the electronic device is reduced, to reduce power consumption of rendering an image frame by the electronic device. An image similarity has continuity, that is, there is a high probability that a similarity between first two image frames is very close to a similarity between last two image frames. Therefore, in this solution, whether to multiplex a next image frame is determined in a manner of determining the similarity between the first two image frames. This can ensure continuity of images and does not affect final rendering effect.

In a possible implementation, the first rendering instruction includes a first observation point location in a to-be-rendered three-dimensional model, that is, the first rendering instruction instructs to render the three-dimensional model based on the first observation point location to obtain the first target image frame.

The method further includes the following steps. A second observation point location corresponding to the second image frame is obtained, where the second image frame is obtained by rendering the three-dimensional model based on the second observation point location.

If a distance between the first observation point location and the second observation point location is less than or equal to a second threshold, the electronic device further determines the similarity between the first image frame and the second image frame; or if a distance between the first observation point location and the second observation point location is greater than a second threshold, the electronic device no longer determines the similarity between the first image frame and the second image frame, but switches to execute the first rendering instruction.

In this solution, before a similarity between image frames is calculated, a distance between observation point locations corresponding to two image frames is first determined, to preliminarily determine the similarity between the two image frames, thereby avoiding determining the similarity between the image frames in a manner of calculating the similarity, and reducing similarity calculation overheads.

In a possible implementation, the method further includes: obtaining a second rendering instruction, where the second rendering instruction instructs to render a second target image frame, and the second rendering instruction includes a third observation point location in the to-be-rendered three-dimensional model; obtaining a third image frame, a fourth image frame, and a fourth observation point location corresponding to the fourth image frame based on the second rendering instruction, where the third image frame is a previous frame of the fourth image frame, the fourth image frame is a previous frame of the second target image frame, and the fourth image frame is obtained by rendering the three-dimensional model based on the fourth observation point location; and if a distance between the third observation point location and the fourth observation point location is greater than the second threshold, executing the second rendering instruction to obtain the second target image frame through rendering; or if a distance between the third observation point location and the fourth observation point location is less than or equal to the second threshold, and a similarity between the third image frame and the fourth image frame is less than the first threshold, executing the second rendering instruction to obtain the second target image frame through rendering.

In this solution, a distance between observation point locations between the image frames is calculated to preliminarily determine a similarity between image frames, and then the similarity between the image frames is further calculated if the distance between the observation point locations between the image frames meets a requirement, so that a frequency of calculating a similarity between image frames can be reduced, thereby reducing similarity calculation overheads and reducing power consumption of the electronic device.

In a possible implementation, the method further includes the following steps.

The first image frame and the second image frame are separately divided into multiple image blocks, to obtain multiple first image blocks corresponding to the first image frame and multiple second image blocks corresponding to the second image frame, where the multiple first image blocks are in a one-to-one correspondence with the multiple second image blocks. Because the first image frame and the second image frame are images of a same size, image block division processing may be performed on the first image frame and the second image frame based on a same image block division manner.

Similarities between image blocks having correspondences in the multiple first image blocks and the multiple second image blocks are separately calculated, to obtain multiple similarities. For example, a first image block and a second image block that have a correspondence may be grouped into one group, and then six first image blocks and six second image blocks may be divided into six groups, where each group includes one first image block and one second image block.

A target similarity in the multiple similarities is determined as the similarity between the first image frame and the second image frame, where the target similarity is a similarity with a smallest value in the multiple similarities.

In this solution, an image frame is divided into multiple image blocks, a similarity between each group of image blocks in two image frames is separately calculated, and a similarity corresponding to a group of image blocks with a lowest similarity in multiple groups of image blocks is used as a final similarity, so that a change of a dynamic object occurring in the image frame can be highlighted, and a slight but important change that occurs in the image frame can be reflected in the similarity between the two image frames. In this way, the electronic device finally determines to execute a rendering instruction, and performs rendering to obtain a new image frame, thereby ensuring continuity of images.

In a possible implementation, the first threshold is determined based on a third threshold, and the third threshold is a preset fixed value; and if a third target image frame is obtained through rendering, the first threshold is the same as the third threshold, the third target image frame is located before the first target image frame, and a rendering manner of the third target image frame is determined based on a similarity between image frames; or if a third target image frame is obtained by multiplexing an image frame, the first threshold is a difference between the third threshold and a fourth threshold, and the fourth threshold is a preset fixed value.

In this solution, because a similarity between image frames has continuity, after frame multiplexing is performed once, there is a high probability that frame multiplexing needs to be performed when it is determined next time whether frame multiplexing needs to be performed. Therefore, the foregoing first threshold is adjusted based on previous decision information about whether frame multiplexing is performed, so that a process of determining whether frame multiplexing is performed may be more appropriate.

In a possible implementation, after obtaining the first target image frame based on the second image frame, the electronic device may determine target duration, where the target duration is a difference between display duration of two image frames and duration of the first target image frame obtained through calculation. Then, the electronic device stops running a rendering thread, where duration in which the rendering thread does not run is target time, and the rendering thread is configured to perform rendering based on a rendering instruction to obtain an image frame. In other words, in the target duration after the first target image frame is obtained, the electronic device suspends the rendering thread, and no longer performs rendering of the image frame.

In a possible implementation, in a process of performing similarity calculation, the electronic device may perform zoom-out processing on the first image frame and the second image frame to obtain a zoom-out first image frame and a zoom-out second image frame; and calculate a similarity between the zoom-out first image frame and the zoom-out second image frame, to obtain the similarity between the first image frame and the second image frame.

In this solution, after two image frames whose similarity is to be calculated are zoomed out, a similarity between two zoom-out image frames is calculated, so that a speed of calculating a similarity can be improved and power consumption of calculating a similarity can be reduced.

A second aspect of this application provides a rendering apparatus, including: an obtaining unit, configured to obtain a first rendering instruction, where the first rendering instruction instructs to render a first target image frame; and the obtaining unit is further configured to obtain a first image frame and a second image frame based on the first rendering instruction, the first image frame is a previous frame of the second image frame, and the second image frame is a previous frame of the first target image frame; and a processing unit, configured to: if a similarity between the first image frame and the second image frame is greater than or equal to a first threshold, obtain the first target image frame based on the second image frame, where content of the first target image frame is the same as content of the second image frame.

In a possible implementation, the first rendering instruction includes a first observation point location in a to-be-rendered three-dimensional model; and the processing unit is further configured to: obtain a second observation point location corresponding to the second image frame, where the second image frame is obtained by rendering the three-dimensional model based on the second observation point location; and if a distance between the first observation point location and the second observation point location is less than or equal to a second threshold, determine the similarity between the first image frame and the second image frame.

In a possible implementation, the obtaining unit is further configured to obtain a second rendering instruction, the second rendering instruction instructs to render a second target image frame, and the second rendering instruction includes a third observation point location in the to-be-rendered three-dimensional model; the obtaining unit is further configured to obtain a third image frame, a fourth image frame, and a fourth observation point location corresponding to the fourth image frame based on the second rendering instruction, the third image frame is a previous frame of the fourth image frame, the fourth image frame is a previous frame of the second target image frame, and the fourth image frame is obtained by rendering the three-dimensional model based on the fourth observation point location; and the processing unit is further configured to: if a distance between the third observation point location and the fourth observation point location is greater than the second threshold, execute the second rendering instruction to obtain the second target image frame through rendering; or if a distance between the third observation point location and the fourth observation point location is less than or equal to the second threshold, and a similarity between the third image frame and the fourth image frame is less than the first threshold, execute the second rendering instruction to obtain the second target image frame through rendering.

In a possible implementation, the processing unit is specifically configured to: separately divide the first image frame and the second image frame into multiple image blocks, to obtain multiple first image blocks corresponding to the first image frame and multiple second image blocks corresponding to the second image frame, where the multiple first image blocks are in a one-to-one correspondence with the multiple second image blocks; separately calculate similarities between image blocks having correspondences in the multiple first image blocks and the multiple second image blocks, to obtain multiple similarities; and determine a target similarity in the multiple similarities as the similarity between the first image frame and the second image frame, where the target similarity is a similarity with a smallest value in the multiple similarities.

In a possible implementation, the first threshold is determined based on a third threshold, and the third threshold is a preset fixed value; and if a third target image frame is obtained through rendering, the first threshold is the same as the third threshold, the third target image frame is located before the first target image frame, and a rendering manner of the third target image frame is determined based on a similarity between image frames; or if a third target image frame is obtained by multiplexing an image frame, the first threshold is a difference between the third threshold and a fourth threshold, and the fourth threshold is a preset fixed value.

In a possible implementation, the processing unit is further configured to: determine target duration, where the target duration is a difference between display duration of two image frames and duration of the first target image frame obtained through calculation; and stop running a rendering thread, where duration in which the rendering thread does not run is target time, and the rendering thread is configured to perform rendering based on a rendering instruction to obtain an image frame.

In a possible implementation, the processing unit is specifically configured to: perform zoom-out processing on the first image frame and the second image frame to obtain a zoom-out first image frame and a zoom-out second image frame; and calculate a similarity between the zoom-out first image frame and the zoom-out second image frame, to obtain the similarity between the first image frame and the second image frame.

A third aspect of this application provides an electronic device. The electronic device includes a memory and a processor. The memory stores code, the processor is configured to execute the code, and when the code is executed, the electronic device performs the method according to any one of the implementations of the first aspect.

A fourth aspect of this application provides a computer-readable storage medium. The computer-readable storage medium stores a computer program, and when the computer program runs on a computer, the computer is enabled to perform the method according to any one of the implementations of the first aspect.

A fifth aspect of this application provides a computer program product. When the computer program product runs on a computer, the computer is enabled to perform the method according to any one of the implementations of the first aspect.

A sixth aspect of this application provides a chip, including one or more processors. A part or all of the processors are configured to read and execute a computer program stored in a memory, to perform the method according to any one of the possible implementations of the foregoing aspects.

Optionally, the chip includes the memory, and the memory and the processor are connected to each other through a circuit or a wire. Optionally, the chip further includes a communication interface, and the processor is connected to the communication interface. The communication interface is configured to receive data and/or information to be processed. The processor obtains the data and/or information from the communication interface, processes the data and/or information, and outputs a processing result through the communication interface. The communication interface may be an input/output interface. The method provided in this application may be implemented by one chip, or may be implemented by multiple chips through collaboration.

**BRIEF** DESCRIPTION OF DRAWINGS

FIG. 1 is a flowchart of a frame multiplexing method in a related technology;
FIG. 2 is a schematic diagram of a structure of an electronic device 101 according to an embodiment of this application;
FIG. 3 is a schematic flowchart of an image frame rendering method 300 according to an embodiment of this application;
FIG. 4 is a schematic diagram of similarities between image frames according to an embodiment of this application;
FIG. 5 is a schematic diagram of image block division according to an embodiment of this application;
FIG. 6 is a schematic diagram of a system architecture according to an embodiment of this application;
FIG. 7 is a schematic diagram of an architecture of a system component according to an embodiment of this application;
FIG. 8 is a schematic flowchart of an image frame rendering method 800 according to an embodiment of this application;
FIG. 9 is a schematic flowchart of intercepting a graphics instruction data stream according to an embodiment of this application;
FIG. 10 is a schematic flowchart of intercepting and buffering a rendered frame according to an embodiment of this application;
FIG. 11 is a schematic flowchart of calculating a distance between camera locations according to an embodiment of this application;
FIG. 12 is a schematic flowchart of calculating a similarity between image frames according to an embodiment of this application;
FIG. 13 is a schematic diagram of a SAT according to an embodiment of this application;
FIG. 14 is a schematic flowchart of determining a similarity according to an embodiment of this application;
FIG. 15 is a schematic flowchart of enabling frame multiplexing according to an embodiment of this application;
FIG. 16 is a schematic diagram of a structure of an apparatus 1600 according to an embodiment of this application;
FIG. 17 is a schematic diagram of a structure of an electronic device according to an embodiment of this application; and

FIG. 18 is a schematic diagram of a structure of a computer-readable storage medium according to an embodiment of this application.

## DESCRIPTION OF EMBODIMENTS

The following describes embodiments of this application with reference to the accompanying drawings. It is clear that the described embodiments are merely some rather than all of embodiments of this application. A person of ordinary skill in the art may learn that, with development of technologies and emergence of a new scenario, the technical solutions provided in embodiments of this application are also applicable to a similar technical problem.

In the specification, claims, and the accompanying drawings of this application, the terms "first", "second", and the like are intended to distinguish similar objects but do not necessarily indicate a specific order or sequence. It should be understood that the data termed in such a way are interchangeable in proper circumstances so that embodiments described herein can be implemented in other orders than the order illustrated or described herein.

In addition, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, system, product, or device. Naming or numbering of steps in this application does not mean that the steps in the method procedures need to be performed in a time/logical order indicated by the naming or numbering. An execution order of the steps in the procedures that have been named or numbered can be changed based on a technical objective to be achieved, provided that same or similar technical effect can be achieved.

For ease of understanding, the following first describes technical terms provided in embodiments.

Graphics processing unit (graphics processing unit, GPU): A type of dedicated hardware configured to process graphics in a computer. An advantage of the GPU is that multiple similar tasks can be processed in parallel. For example, when rendering an image, multiple pixels are simultaneously rendered, and the GPU can accelerate this process.

Compute shader (Compute Shader, CS): Use a parallel calculation feature of a GPU that allows the GPU to process work other than rendering pixels, for example, simulating motion tracks of all particles in space, dividing a graph into hundreds of blocks, and simultaneously processing the hundreds of blocks. The compute shader can be executed in a graphics rendering process and supports real-time computing.

Real-time rendering: Render required images through real-time computing. For example, a view of a game image is essentially a result displayed by multiple continuous rendered frames without interruption. Each rendered frame is obtained through complex computation by a computer processor and a graphics processing unit. Generally, rendering in which each rendered frame takes less than 100 ms is referred to as the real-time rendering, and a rendering process in which each rendered frame takes more than 500 ms is referred to as non-real-time rendering or offline rendering.

Rendered frame: An image that is rendered by a graphics processing unit and that may also be referred to as an image frame. Multiple rendered frames may be continuously played to form dynamic effect.

Frame rate: In real-time rendering, a quantity of rendered frames generated per second is referred to as the frame rate, expressed in frame per second. For example, "A frame rate of 60" means that 60 rendered frames are generated in one second. A higher frame rate indicates smoother display effect.

Screen refresh rate: In real-time rendering, a rendered frame generated during rendering is finally sent by a graphics processing unit to a display buffer, and a screen obtains the rendered frame from the display buffer for display. Each time the screen is refreshed, a latest rendered frame is obtained from the rendering buffer. A quantity of times the screen is refreshed per second is referred to as the screen refresh rate. A higher screen refresh rate indicates a higher frame rate supported by the screen. Final display effect depends on minimum values of the screen refresh rate and the frame rate.

Camera: A rendering process is to simulate a process of camera video recording in a real world. The camera is a rendering term. A camera in rendering is similar to a camera in the real world, and is an eye for viewing a scene. Simply speaking, the camera is an object configured to record scene information. A rendered frame is formed by projection of a viewed scene to the camera through observation of the camera.

Power consumption: measures efficiency of power consumption in a calculation process, expressed in milliampere (mA). At a specific battery level of a mobile terminal, higher running power consumption of the mobile terminal indicates faster power consumption and shorter use time.

Frame insertion: Insert a new frame between two continuous rendered frames. In a case of a video, a frame insertion action may generate an intermediate video frame through interpolation based on information about a previous frame and a next frame. In a case of a game, a frame insertion action may generate image information of a third frame based on image information of two previous frames.

Frame multiplexing: An operation of transmitting two identical rendered frames to a display buffer continuously. This method usually reduces a frequency of rendering, thereby reducing power consumption generated through rendering.

Motion estimation and motion compensation (Motion Estimation and Motion Compensation, MEMC): A frame insertion technology whose principle is that hardware quickly calculates an optical flow between two frames to generate a third frame.

Structure similarity (Structural Similarity, SSIM): An algorithm for calculating a similarity between two images.

Summed area table (Summed Area Table, SAT): The summed area table is an algorithm for quickly calculating a sum of all pixels in a block of an image. In embodiments of this application, the summed area table is used to accelerate calculation of an SSIM.

Pixel buffer object (Pixel Buffer Object, PBO): A technology used to store a rendered frame. In embodiments of this application, two continuous rendered frames are stored, to facilitate calculation of a similarity between rendered frames.

Driver: A type of program that enables a computer operating system and underlying hardware to communicate with each other. An operating system or a developer is enabled to use a feature of hardware.

Game engine: A game making tool that fully integrates and uses an underlying driver to enable a game developer to quickly make a game.

Convolution kernel: When an input image is given during image processing, pixels in a small area of the input image are weighted averaged into each corresponding pixel in an output image. A weight is defined by a function, and this function is referred to as the convolution kernel.

Frequency limiting and frame limiting: To prevent a mobile phone from overheating during a game, a forced manner for limiting a chip running frequency and a game running frame rate.

Instruction reordering layer: A component that is between an application layer and a driver layer and that can intercept and optimize a driver instruction stream invoked by an application program.

YUV color space: A digital coding mode of a color. Y indicates luminance, U indicates chrominance, and V indicates concentration. The three values may jointly indicate a color.

Currently, due to the popularity of mobile phones with high refresh rate screens, game manufacturers increase game frame rates to adapt to high refresh rates. After the game frame rates are increased, although game smoothness can be well improved, a large quantity of rendered frames are wasted and power consumption of a mobile phone is excessively high. As a result, the mobile phone is seriously hot and battery life of the mobile phone is affected. To ensure user safety and prevent a user from being scalded by an excessively high temperature, a chip and an operating system of the mobile phone perform a frequency limiting and frame limiting operation on the mobile phone, to reduce running power consumption of the chip and the mobile phone. If the frequency limiting and frame limiting operation is performed on the mobile phone, the game frame rate is reduced by half or more, thereby affecting game experience of a player. In addition, to reduce power consumption of a game on a high refresh rate screen, a game manufacturer usually limits a game frame rate in a specific scenario. For example, a 3 dimensions (3 Dimensions, 3D) game limits a frame rate of the game to 10 frames after a player does not perform any operation for one minute. Mobile phone manufacturers use technical solutions such as frame insertion to reduce a rendering frequency. For example, an MEMC chip is added to a mobile phone of a specific model, and the MEMC chip is used to accelerate game frame insertion. This frame insertion technology can increase a rendered frame rate of 60 frames to a display frame rate of 120 frames.

However, frame insertion solutions such as MEMC may cause distortion of an image generated by frame insertion, thereby causing a vertigo feeling of a player. However, a scenario-based frame rate limitation lacks universality, and manufacturers cannot identify all scenarios that require a frame rate limitation.

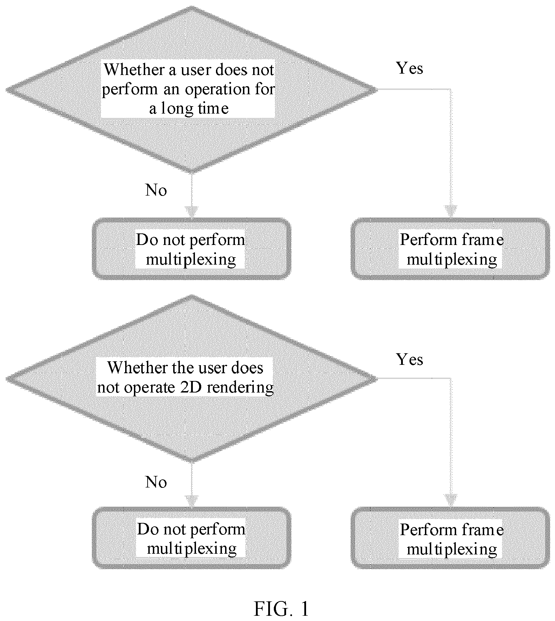

Refer to FIG. 1. FIG. 1 is a flowchart of a frame multiplexing method in a related technology. As shown in FIG. 1, the solution shown in FIG. 1 is a scenario-based frame multiplexing solution. The frame multiplexing solution mainly provides a scenario identification-based frame multiplexing method on a game engine side. In this method, frame multiplexing is performed in a low-change scenario that has a low requirement on a frame rate, to reduce power consumption of a mobile phone game.

The frame multiplexing method has two main modules: a scenario identification module and a frame multiplexing enabling module. The scenario identification module extracts features of a scenario in which frame multiplexing needs to be enabled, such as a specific drawing instruction and no feedback from users for a long time, and determines whether to perform frame multiplexing based on these features. When the scenario identification module determines that frame multiplexing needs to be enabled, the frame multiplexing enabling module copies image information of a previous frame and sends the information to a display buffer, and simultaneously sends a message to a rendering module to pause rendering calculation of one or more frames, to reduce a frame rate by half or more.

However, the scenario identification module in the related technology requires manual intervention and needs to list the features one by one. To achieve good optimization effect, a large amount of labor costs need to be consumed in scenario identification and feature extraction. In addition, the frame multiplexing method has poor universality and scalability, and cannot be used across games. When the frame multiplexing method is transplanted to a new game, a scenario identification module needs to be re-created. In addition, optimization effect of the frame multiplexing method is limited. A large quantity of rendered frames are still wasted because all scenarios in which frame multiplexing can be implemented cannot be manually traversed and identified.

In view of this, an embodiment of this application provides an image frame rendering method. If a similarity between two adjacent rendered image frames is high, a next image frame in the two image frames is multiplexed instead of rendering a new image frame, so that an image frame that needs to be rendered by an electronic device is reduced, to reduce power consumption of rendering an image frame by the electronic device. An image similarity has continuity, that is, there is a high probability that a similarity between first two image frames is very close to a similarity between last two image frames. Therefore, in this solution, whether to multiplex a next image frame is determined in a manner of determining the similarity between the first two image frames. This can ensure continuity of images and does not affect final rendering effect.

For example, the electronic device in embodiments of this application may be a mobile phone (mobile phone), a personal computer (personal computer, PC), a notebook computer, a tablet computer, a smart television, a mobile Internet device (mobile Internet device, MID), a wearable device (such as a smartwatch, smart glasses, or a smart helmet), a virtual reality (virtual reality, VR) device, an augmented reality (augmented reality, AR) device, a wireless electronic device in industrial control (industrial control), a wireless electronic device in self driving (self driving), a wireless electronic device in remote medical surgery (remote medical surgery), a wireless electronic device in a smart grid (smart grid), a wireless electronic device in transportation safety (transportation safety), a wireless electronic device in a smart city (smart city), a wireless electronic device in a smart home (smart home), or the like. A specific form of the electronic device is not specially limited in the following embodiments.

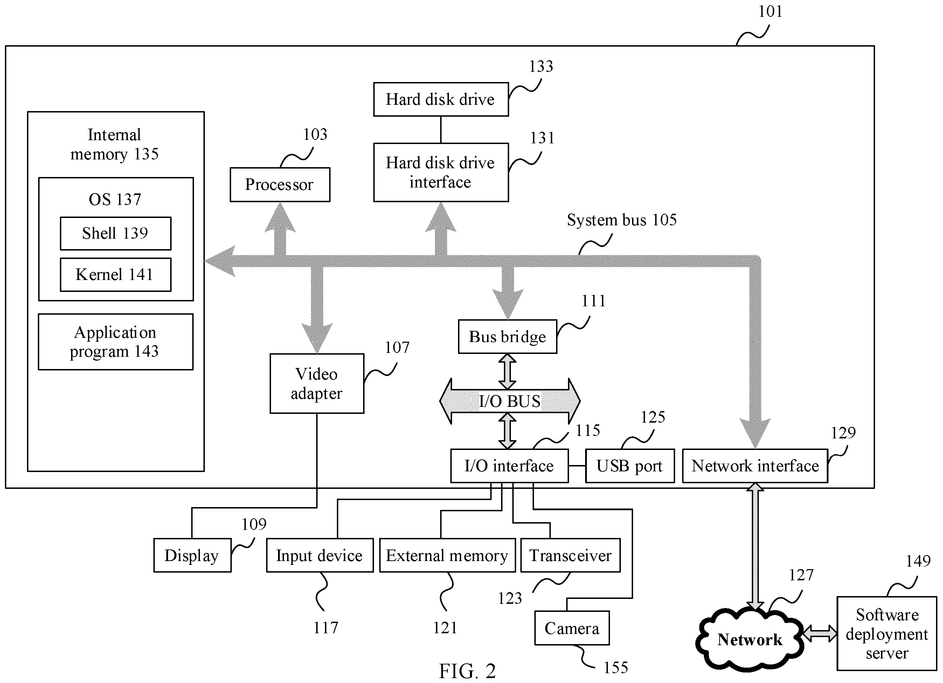

Refer to FIG. 2. FIG. 2 is a schematic diagram of a structure of an electronic device 101 according to an embodiment of this application. As shown in FIG. 2, the electronic device 101 includes a processor 103, where the processor 103 is coupled to a system bus 105, the processor 103 may be one or more processors, and each processor may include one or more processor cores; and a video adapter (video adapter) 107, where the video adapter may drive a display 109, and the display 109 is coupled to the system bus 105. The system bus 105 is coupled to an input/output (I/O) bus through a bus bridge 111. An I/O interface 115 is coupled to the I/O bus. The I/O interface 115 communicates with multiple I/O devices, for example, an input device 117 (for example, a touchscreen), an external memory 121 (for example, a hard disk, a floppy disk, an optical disc, or a USB flash drive), a multimedia interface, a transceiver 123 (which may send and/or receive a radio communication signal), a camera 155 (which may capture static and dynamic digital video images), and an external USB port 125. Optionally, an interface connected to the I/O interface 115 may be a USB port.

The processor 103 may be any conventional processor, including a reduced instruction set computing (reduced instruction set Computing, RISC) processor, a complex instruction set computing (complex instruction set computing, CISC) processor, or a combination thereof. Optionally, the processor may be a dedicated apparatus such as an ASIC.

The electronic device 101 may communicate with a software deployment server 149 through a network interface 129. For example, the network interface 129 is a hardware network interface, for example, a network interface card. A network 127 may be an external network such as the Internet, or an internal network such as the Ethernet or a virtual private network (virtual private network, VPN). Optionally, the network 127 may alternatively be a wireless network, for example, a Wi-Fi network or a cellular network.

A hard disk drive interface 131 is coupled to the system bus 105. A hardware drive interface is connected to a hard disk drive 133. The internal memory 135 is coupled to the system bus 105. Data running in the internal memory 135 may include an operating system (OS) 137, an application program 143, and a scheduling table that are of the electronic device 101.

The processor 103 may communicate with the internal memory 135 through the system bus 105, and extract an instruction and data in the application program 143 from the internal memory 135, to implement program execution.

The operating system includes a shell 139 and a kernel (kernel) 141. The shell 139 is an interface between a user and the operating system. The shell 139 is an outermost layer of the operating system. The shell 139 manages interaction between the user and the operating system: waiting for an input from the user, interpreting the input from the user to the operating system, and processing various output results of the operating system.

The kernel 141 includes components of the operating system that are configured to manage a memory, a file, a peripheral, and a system resource. The kernel 141 directly interacts with hardware. A kernel of an operating system usually runs processes, provides communication between the processes, and provides CPU time slice management, interruption, memory management, I/O management, and the like.

For example, if the electronic device 101 is a smartphone, the application program 143 includes a program related to instant messaging. In an embodiment, when the application program 143 needs to be executed, the electronic device 101 may download the application program 143 from the software deployment server 149.

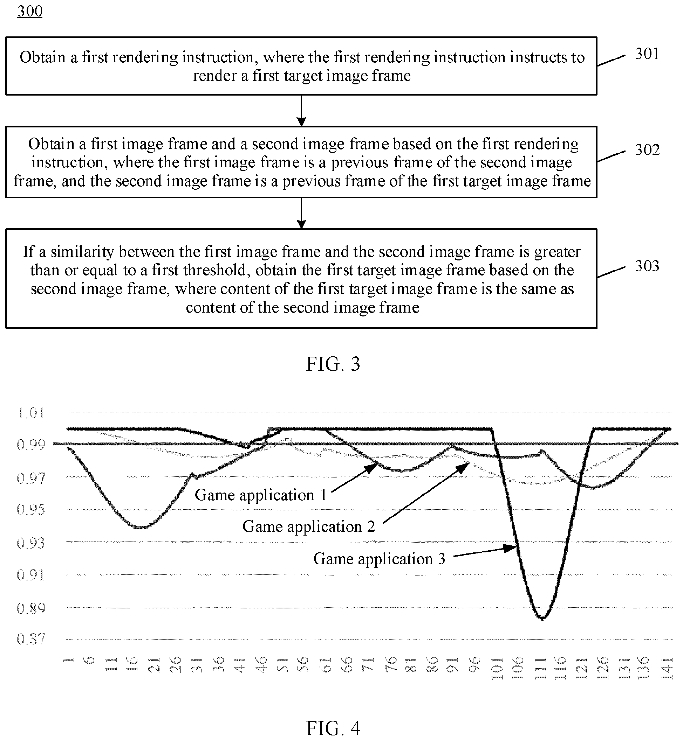

Refer to FIG. 3. FIG. 3 is a schematic flowchart of an image frame rendering method 300 according to an embodiment of this application. As shown in FIG. 3, the method 300 includes the following steps 301 to 303.

Step 301: Obtain a first rendering instruction, where the first rendering instruction instructs to render a first target image frame.

In a process in which an electronic device runs an application program that needs to continuously render an image frame, the electronic device may obtain the first rendering instruction initiated by the application program, where the first rendering instruction instructs to render the first target image frame. For example, the application program may, for example, be an application program that needs to render a three-dimensional model to obtain an image frame, such as a game application program, a navigation application program, an industrial application program, or a medical application program. The first target image frame that the first rendering instruction instructs to render is used to be displayed on a display of the electronic device, to form a continuous image together with another image frame.

Optionally, the first rendering instruction may be intercepted by an instruction reordering layer in the electronic device. In a process in which the electronic device runs an application program, the application program initiates the first rendering instruction to instruct hardware in the electronic device to perform a rendering operation. The instruction reordering layer in the electronic device may intercept the first rendering instruction before the first rendering instruction reaches the hardware that is in the electronic device and that performs the rendering operation.

Step 302: Obtain a first image frame and a second image frame based on the first rendering instruction, where the first image frame is a previous frame of the second image frame, and the second image frame is a previous frame of the first target image frame.

The first image frame and the second image frame are rendered image frames. The first image frame and the second image frame are image frames rendered before the first rendering instruction is obtained. In addition, the first image frame, the second image frame, and the first target image frame that is instructed by the first rendering instruction are three continuous image frames, that is, the first image frame and the second image frame are two previous frames of the first target image frame.

For example, in a process in which the electronic device runs a game application, the first image frame is a 5th image frame in the running process of the game application, the second image frame is a 6th image frame, and the first target image frame is a 7th image frame. In addition, the first image frame and the second image frame are rendered image frames, and the first target image frame is a to-be-rendered image frame.

Optionally, to help the electronic device quickly obtain the first image frame and the second image frame, a buffer of an image frame may be preset in the electronic device, and the buffer is used to store an image frame obtained through rendering. In this way, when obtaining the first rendering instruction for instructing to render the first target image frame, the electronic device may obtain the two previous image frames, namely, the first image frame and the second image frame, of the first target image frame from the buffer based on the first rendering instruction.

Further, because only two image frames need to be used when a similarity between image frames is subsequently calculated, the electronic device may set two buffers, and each buffer is configured to store one image frame. The two buffers of the electronic device alternately store latest image frames obtained through rendering, so that the two buffers can store two latest image frames obtained through rendering by the electronic device. Simply speaking, after the electronic device obtains a new image frame through rendering, the electronic device may determine a buffer that is in two buffers and that stores an earlier image frame, and store the new image frame in the determined buffer, so that the two buffers can store two latest image frames.

For example, it is assumed that the electronic device has a buffer A and a buffer B. After obtaining an Nth image frame through rendering, the electronic device stores the Nth image frame in the buffer A; and after obtaining an (N+1)th image frame through rendering, the electronic device stores the (N+1)th image frame in the buffer B. Then, because the Nth image frame in the buffer A is an earlier image frame relative to the (N+1)th image frame in the buffer B, after obtaining an (N+2)th image frame through rendering, the electronic device stores the (N+2)th image frame in the buffer A to replace the original Nth image frame. Similarly, because the (N+1)th image frame in the buffer B is an earlier image frame relative to the (N+2)th image frame in the buffer A, after obtaining an (N+3)th image frame through rendering, the electronic device stores the (N+3)th image frame in the buffer B to replace the original (N+1)th image frame.

Step 303: If a similarity between the first image frame and the second image frame is greater than or equal to a first threshold, obtain the first target image frame based on the second image frame, where content of the first target image frame is the same as content of the second image frame.

After obtaining the first image frame and the second image frame based on the first rendering instruction, the electronic device may calculate the similarity between the first image frame and the second image frame.

If the similarity between the first image frame and the second image frame is greater than or equal to the first threshold, the electronic device may directly obtain the first target image frame based on the second image frame, that is, perform frame multiplexing on the second image frame, so that the content of the first target image frame is the same as the content of the second image frame. Simply speaking, the electronic device may copy the second image frame obtained through rendering, and use a copy of the second image frame as the first target image frame, so that the second image frame and the first target image frame that are continuously displayed on the electronic device are two frames with same content. In this way, the electronic device may no longer execute the first rendering instruction, that is, avoid rendering the first target image frame.

If a similarity between the first image frame and the second image frame is less than a first threshold, the electronic device may execute the first rendering instruction, to obtain the first target image frame through rendering. The first threshold may be a threshold determined based on an actual situation. For example, the first threshold may be 0.99 or 0.98. For example, if a requirement on an image is high, a value of the first threshold may be a high value; or if a requirement on an image is not high and a requirement on power consumption of the electronic device is high, a value of the first threshold may be a low value.

In other words, if a similarity between two previous image frames is high, the electronic device may use a next image frame of the two previous image frames as a new image frame, that is, multiplex the next image frame of the two previous image frames; or if a similarity between two previous image frames is not high, the electronic device executes a rendering instruction to obtain a new image frame through rendering.

The applicant finds through research that, in most applications in which image frames need to be rendered, a similarity between image frames has continuity, that is, there is a high probability that a similarity between first two image frames is very close to a similarity between last two image frames. For example, refer to FIG. 4. FIG. 4 is a schematic diagram of similarities between image frames according to an embodiment of this application. As shown in FIG. 4, FIG. 4 shows continuity of similarities between image frames in three game applications. Specifically, a horizontal coordinate in FIG. 4 indicates a frame number of an image frame, and a vertical coordinate in FIG. 4 indicates a similarity between two adjacent image frames. Therefore, a curve in FIG. 4 continuously indicates the similarity between the two adjacent image frames. For example, the curve in FIG. 4 sequentially indicates a similarity between a 1st image frame and a 2nd image frame, a similarity between the 2nd image frame and a 3rd image frame, a similarity between an Nth image frame and an (N+1)th image frame, and the like. It can be learned from FIG. 4 that, in a game application 1, a game application 2, and a game application 3, similarities between images have continuity, that is, a similarity between first two image frames and a similarity between last two image frames do not change abruptly. Therefore, if the similarity between the first two image frames is high, it may be considered that the similarity between the last two image frames is usually also high.

Based on this, in this embodiment, if the similarity between the first two image frames is high, a next image frame in the first two image frames is multiplexed instead of rendering a new image frame. Because the similarity between the last two image frames is also high, a similarity between an image frame obtained by multiplexing the next image frame in the first two image frames and an actual image frame is also high, so that a sudden image change does not occur.

In other words, in this embodiment, whether to multiplex the next image frame is determined in a manner of determining the similarity between the first two image frames. This can ensure continuity of images and does not affect final rendering effect. In addition, if a similarity between two adjacent rendered image frames is high, a next image frame in the two image frames is multiplexed instead of rendering a new image frame, so that an image frame that needs to be rendered by the electronic device can be reduced, to reduce power consumption of rendering an image frame by the electronic device.

When the electronic device determines to obtain the first target image frame by multiplexing the second image frame, the electronic device needs to stop executing the foregoing first rendering instruction, to reduce power consumption caused by rendering an image frame.

Because a similarity between image frames has continuity, after frame multiplexing is performed once, there is a high probability that frame multiplexing needs to be performed when it is determined next time whether frame multiplexing needs to be performed. Therefore, the foregoing first threshold may be adjusted based on previous decision information about whether frame multiplexing is performed, so that a process of determining whether frame multiplexing is performed is more appropriate.

For example, the first threshold may be determined based on a third threshold, and the third threshold is a preset fixed value. For example, the third threshold may be 0.99.

If a third target image frame is obtained through rendering, the first threshold is the same as the third threshold, the third target image frame is located before the first target image frame, and a rendering manner of the third target image frame is determined based on a similarity between image frames. Simply speaking, the third target image frame is an image frame that is before the first target image frame and whose rendering manner needs to be determined by determining the similarity between the image frames. The rendering manner is a manner of obtaining an image frame through rendering by executing a rendering instruction or a manner of obtaining an image frame through frame multiplexing.

If a third target image frame is obtained by multiplexing an image frame, the first threshold is a difference between the third threshold and a fourth threshold, and the fourth threshold is a preset fixed value. The fourth threshold may, for example, be 0.005.

For example, assuming that the electronic device determines a rendering manner of an image frame every three frames, the electronic device may determine a rendering manner of the 3rd image frame based on the 1st image frame and the 2nd image frame, and determine a rendering manner of a 6th image frame based on a 4th image frame and a 5th image frame. If the 3rd image frame is obtained through rendering by executing a rendering instruction (that is, the 3rd image frame is not obtained by multiplexing the 2nd image frame), a first threshold corresponding to the 6th

image frame may be the same as the foregoing third threshold. If the 3<sup>rd</sup> image frame is obtained by multiplexing the 2<sup>nd</sup> image frame, a first threshold corresponding to the 6<sup>th</sup> image frame may be a difference between the foregoing third threshold and the fourth threshold.

In this embodiment, the electronic device may calculate a similarity once every multiple image frames, or may multiplex multiple image frames when calculating a similarity once. A frequency of calculating a similarity may be determined based on a category of a game application. For example, the electronic device may calculate the similarity between a 1<sup>st</sup> image frame and the 2<sup>nd</sup> image frame, to determine the rendering manner of the 3<sup>rd</sup> image frame. Then, the electronic device obtains the 4<sup>th</sup> image frame and the 5<sup>th</sup> image frame through rendering, and calculates a similarity between the two image frames, to determine the rendering manner of the 6<sup>th</sup> image frame. By analogy, the electronic device calculates a similarity once every three image frames. For another example, when the electronic device renders some 2D games, the electronic device may calculate the similarity between the 1<sup>st</sup> image frame and the 2<sup>nd</sup> image frame, to determine rendering manners of the 3<sup>rd</sup> image frame, the 4<sup>th</sup> image frame, and the 5<sup>th</sup> image frame. Then, the electronic device may continue to calculate a similarity between the 6<sup>th</sup> image frame and a 7<sup>th</sup> image frame, to determine rendering manners of an 8<sup>th</sup> image frame, a 9<sup>th</sup> image frame, and a 10<sup>th</sup> image frame. By analogy, the electronic device may determine rendering manners of three image frames every two similarity calculations.

Optionally, after obtaining the first target image frame based on the second image frame, the electronic device may determine target duration, where the target duration is a difference between display duration of two image frames and duration of the first target image frame obtained through calculation. For example, when a current frame rate of the electronic device is 60, that is, 60 image frames are displayed per second, display duration of two image frames is 2/60 seconds, and the duration of the first target image frame obtained through calculation is duration of performing the foregoing steps 301 to 303.

Generally, after obtaining an image frame through rendering, the electronic device usually needs to wait for display duration of an image frame before rendering a next image frame. In this embodiment, after obtaining the second image frame through rendering, the electronic device performs the foregoing steps 301 to 303 to obtain the first target image frame. The first target image frame no longer needs to be rendered, and an image frame that needs to be rendered by the electronic device is a next image frame of the first target image frame. Therefore, the electronic device may obtain the target duration by subtracting the duration of the first target image frame obtained through calculation from the display duration of the two image frames.

Then, the electronic device stops running a rendering thread, where duration in which the rendering thread does not run is target time, and the rendering thread is configured to perform rendering based on a rendering instruction to obtain an image frame. In other words, in the target duration after the first target image frame is obtained, the electronic device suspends the rendering thread, and no longer performs rendering of the image frame.

It may be understood that, for some application programs that obtain an image frame by rendering a three-dimensional model, a rendering process of an image frame is actually observing a stereoscopic three-dimensional model based on a specific location, and displaying an observed scene in a form of a two-dimensional image, to obtain the image frame. Simply speaking, rendering a three-dimensional model may be understood as photographing a three-dimensional model at a location by using a camera to obtain a two-dimensional image. Therefore, after an observation point location in the three-dimensional model is determined, an object that needs to be rendered in the three-dimensional model may be determined, so that content in the two-dimensional image can be determined.

In other words, for the three-dimensional model, content in an image frame obtained through rendering is determined based on the observation point location in the three-dimensional model. There is a high probability that content in two image frames obtained through rendering based on two observation point locations that are close to each other is similar, and there is a high probability that content in two image frames obtained through rendering based on two observation point locations that are far away from each other is not similar.

Based on this, in this embodiment, before a similarity between image frames is calculated, a distance between observation point locations corresponding to two image frames may be first determined, to determine a similarity between the two image frames, thereby avoiding determining the similarity between the image frames in a manner of calculating the similarity, and reducing similarity calculation overheads.

For example, the first rendering instruction may include a first observation point location in a to-be-rendered three-dimensional model, that is, the first rendering instruction instructs to render the three-dimensional model based on the first observation point location to obtain the first target image frame.

Because the second image frame is an image frame obtained through rendering, the electronic device may obtain a second observation point location corresponding to the second image frame, where the second image frame is obtained by rendering the three-dimensional model based on the second observation point location.

Then, the electronic device may determine a distance between the first observation point location and the second observation point location, and determine a value relationship between the distance between the first observation point location and the second observation point location and a second threshold. If the distance between the first observation point location and the second observation point location is less than or equal to the second threshold, the electronic device further determines the similarity between the first image frame and the second image frame; or if the distance between the first observation point location and the second observation point location is greater than the second threshold, the electronic device no longer determines the similarity between the first image frame and the second image frame, but switches to execute the first rendering instruction.

Specifically, after determining the distance between the first observation point location and the second observation point location, if the distance between the first observation point location and the second observation point location is less than or equal to the second threshold, the electronic device may determine the similarity between the first image frame and the second image frame. The second threshold may be a threshold determined based on an actual situation. For example, the second threshold may be 0.3 meters or 0.4 meters. For example, if a requirement on an image is high, a value of the second threshold may be a low value; or if a requirement on an image is not high and a requirement on power consumption of the electronic device is high, a value of the second threshold may be a high value.

The distance between the first observation point location and the second observation point location may be calculated according to Equation 1:

$$\text{Distance} = \text{Sqrt}((X1 - X2)^2 + (Y1 - Y2)^2 + (Z1 - Z2)^2) \quad \text{Equation 1}$$

Distance indicates the distance between the first observation point location and the second observation point location; Sqrt indicates root extraction; X1, Y1, and Z1 are coordinates of the first observation point location; and X2, Y2, and Z2 are coordinates of the second observation point location.

In other words, the electronic device may first determine a distance between an observation point location of a to-be-rendered image frame and an observation point location of a previous image frame, to preliminarily determine a similarity between the two image frames. If the observation point locations of the two image frames are far away from each other, it may be considered that there is a high probability that the two image frames are not similar. Therefore, a rendering instruction is executed to obtain the to-be-rendered image frame. If the observation point locations of the two image frames are close to each other, it may be considered that there is a high probability that the two image frames are similar. Therefore, a similarity between two previous image frames of the to-be-rendered image frame is further calculated, to determine whether the to-be-rendered image frame is similar to the previous image frame.

For example, the foregoing method 300 may further include the following steps.

First, the electronic device may obtain a second rendering instruction, where the second rendering instruction instructs to render a second target image frame, and the second rendering instruction includes a third observation point location in the to-be-rendered three-dimensional model.

Then, the electronic device obtains a third image frame, a fourth image frame, and a fourth observation point location corresponding to the fourth image frame based on the second rendering instruction, where the third image frame is a previous frame of the fourth image frame, the fourth image frame is a previous frame of the second target image frame, and the fourth image frame is obtained by rendering the three-dimensional model based on the fourth observation point location.

Second, the electronic device may determine whether a distance between the third observation point location and the fourth observation point location is greater than the second threshold, and if the distance between the third observation point location and the fourth observation point location is greater than the second threshold, execute the second rendering instruction to obtain the second target image frame through rendering.

Alternatively, if the distance between the third observation point location and the fourth observation point location is less than or equal to the second threshold, the electronic device may trigger calculation of a similarity between the third image frame and the fourth image frame. In addition, if the similarity between the third image frame and the fourth image frame is less than the first threshold, the electronic device executes the second rendering instruction to obtain the second target image frame through rendering.

In this embodiment, a distance between observation point locations between image frames is calculated to preliminarily determine a similarity between the image frames, and then the similarity between the image frames is further calculated if the distance between the observation point locations between the image frames meets a requirement, so that a frequency of calculating a similarity between image frames can be reduced, thereby reducing similarity calculation overheads and reducing power consumption of the electronic device.

In some possible embodiments, after two image frames whose similarity is to be calculated are zoomed out, the electronic device may calculate a similarity between two zoom-out image frames, to improve a speed of calculating a similarity and reduce power consumption of calculating a similarity.

For example, the electronic device may perform zoom-out processing on the first image frame and the second image frame to obtain a zoom-out first image frame and a zoom-out second image frame. For example, the electronic device may zoom out the first image frame and the second image frame to 1/9 of an original length and width, that is, zoom out the first image frame and the second image frame to 1/81 of an original area. Zoom-out ratios of the first image frame and the second image frame may be determined based on an actual situation. If a power consumption requirement of the electronic device is high, the zoom-out ratios of the first image frame and the second image frame may be high values.

Then, the electronic device calculates a similarity between the zoom-out first image frame and the zoom-out second image frame, and uses the similarity obtained through calculation as the similarity between the first image frame and the second image frame.

In this solution, an area of an image frame whose similarity is to be calculated is greatly reduced at a cost of a small amount of precision for calculating the similarity, thereby reducing similarity calculation overheads and effectively reducing power consumption of the electronic device.

For ease of understanding, the following describes in detail a process of calculating a similarity between image frames.

Specifically, the method 300 further includes the following multiple steps of calculating the similarity between the first image frame and the second image frame.

First, the first image frame and the second image frame are separately divided into multiple image blocks, to obtain multiple first image blocks corresponding to the first image frame and multiple second image blocks corresponding to the second image frame, where the multiple first image blocks are in a one-to-one correspondence with the multiple second image blocks.

In this embodiment, the electronic device may perform image block division on the first image frame and the second image frame, or may perform image block division on the zoom-out first image frame and the zoom-out second image frame. This is not specifically limited in this embodiment.

Because the first image frame and the second image frame are images of a same size, image block division processing may be performed on the first image frame and the second image frame based on a same image block division manner. For example, the electronic device may divide the first image frame into six first image blocks. A length of each image block is 1/3 of a length of the first image frame, and a width of each image block is 1/2 of a width of the first image frame, that is, the length of the first image frame is divided into three parts, and the width of the first image frame is divided into two parts. Similarly, the electronic device may divide the second image frame based on a same manner, to obtain six second image blocks corresponding to the second image frame. In addition, the multiple first image blocks corresponding to the first image frame are in the one-to-one correspondence with the multiple second image blocks corresponding to the second image frame, that is, any image block of the multiple first image blocks corresponds to one second image block that is located at a same location in the second image frame.

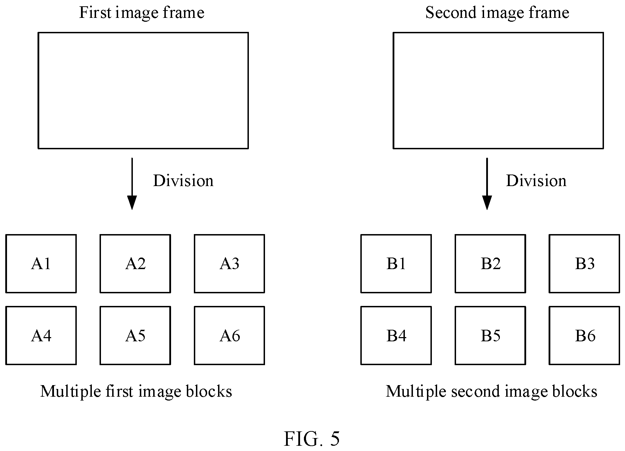

For example, refer to FIG. 5. FIG. 5 is a schematic diagram of image block division according to an embodiment of this application. As shown in FIG. 5, the first image frame is divided into six image blocks, including: an image block A1 at an upper left location, an image block A2 at an upper middle location, an image block A3 at an upper right location, an image block A4 at a lower left location, an image block A5 at a lower middle location, and an image block A6 at a lower right location. The second image frame is divided into six image blocks, including: an image block B 1 at an upper left location, an image block B2 at an upper middle location, an image block B3 at an upper right location, an image block B4 at a lower left location, an image block B5 at a lower middle location, and an image block B6 at a lower right location. The image block A1 corresponds to the image block B1, the image block A2 corresponds to the image block B2, the image block A3 corresponds to the image block B3, the image block A4 corresponds to the image block B4, the image block A5 corresponds to the image block B5, and the image block A6 corresponds to the image block B6.

Then, similarities between image blocks having correspondences in the multiple first image blocks and the multiple second image blocks are separately calculated, to obtain multiple similarities.

In this embodiment, a first image block and a second image block that have a correspondence may be grouped into one group, and then six first image blocks and six second image blocks may be divided into six groups, where each group includes one first image block and one second image block.

Specifically, for the first image block and the second image block that have a correspondence, SSIM values of the two image blocks may be separately calculated in parallel on a GPU by using 7x7 convolution kernels. Each convolution kernel outputs one SSIM value, then SSIM values output by all convolution kernels are averaged, and an average SSIM value is output. In this way, for the six groups of the first image blocks and the second image blocks that have correspondences, six averaged SSIM values may be output in total, that is, six similarities are obtained.

A process of calculating the similarity between each group of image blocks may be indicated according to Equation 2 to Equation 6:

$$\mu_{xjk} = \frac{1}{N_{jk}} \sum_{i=1}^{N_{jk}} x_{ijk} \quad \text{Equation 2}$$

$$\sigma_{xjk} = \left(\frac{1}{N_{jk}-1}\sum_{i=1}^{N_{jk}}(x_{ijk} - \mu_{xjk})^2\right)^{1/2} \quad \text{Equation 3}$$

$$\sigma_{xyjk} = \frac{1}{N_{jk}-1}\sum_{i=1}^{N_{jk}}(x_{ijk} - \mu_{xjk})*(y_{ijk} - \mu_{yjk}) \quad \text{Equation 4}$$

$$\text{SSIM}_{jk} = \frac{(2*\mu_{xjk}*\mu_{yjk}+ C_1)*(2*\sigma_{xyjk}+ C_2)}{\left(\mu_{xjk}^2 + \mu_{yjk}^2 + C_1\right)*\left(\sigma_{xjk}^2 + \sigma_{yjk}^2 + C_2\right)} \quad \text{Equation 5}$$

$$\text{SSIM}_j = \frac{1}{M_j}\sum_{k=1}^{M_j} SSIM_{jk} \quad \text{Equation 6}$$

X indicates the first image frame, and appears in a form of $X_i$ in the equation. Y indicates the second image frame, and appears in a form of $Y_i$ in the equation. $x_{ijk}$ indicates a Y value in YUV space of an $i^{th}$ pixel in a $k^{th}$ convolution kernel of a $j^{th}$ image block in the first image frame. $y_{ijk}$ indicates a Y value in YUV space of an $i^{th}$ pixel in a $k^{th}$ convolution kernel of a $j^{th}$ image block in the second image frame. $N_{jk}$ indicates a quantity of pixels in a $k^{th}$ convolution kernel of a $j^{th}$ image block, and $N_{jk}$ is equal to 49 in the 7x7 convolution kernels. $\mu_{xjk}$ indicates an average value of Y values of YUV space of pixels in the $k^{th}$ convolution kernel of the $j^{th}$ image block in the first image frame. $\sigma_{xjk}$ indicates a standard deviation between Y values of YUV space of pixels in the $k^{th}$ convolution kernel of the $j^{th}$ rendering block in the first image frame. $\sigma_{xyjk}$ indicates a covariance between Y values of YUV space of pixels in the $k^{th}$ convolution kernels of the $j^{th}$ image blocks in the first image frame and the second image frame. $\mu_{yjk}$ indicates an average value of Y values of YUV space of pixels in the $k^{th}$ convolution kernel of the $j^{th}$ rendering block in the second image frame. $\sigma_{yjk}$ indicates a standard deviation between Y values of YUV space of pixels in the $k^{th}$ convolution kernel of the $j^{th}$ rendering block in the second image frame. $M_j$ indicates a quantity of convolution kernels used by a $j^{th}$ image block, where the quantity depends on a size of the image block and a size of the convolution kernels. $\text{SSIM}_{jk}$ indicates an SSIM value of the $k^{th}$ convolution kernels of the $j^{th}$ image blocks in the first image frame and the second image frame. $\text{SSIM}_j$ indicates an average value of SSIM values of all the convolution kernels of the $j^{th}$ image blocks in the first image frame and the second image frame, and is also an SSIM value of the $j^{th}$ image blocks.

Finally, a target similarity in the multiple similarities is determined as the similarity between the first image frame and the second image frame, where the target similarity is a similarity with a smallest value in the multiple similarities.

After the multiple similarities corresponding to the multiple groups of image blocks are obtained, the similarity (namely, the target similarity) with the smallest value in the multiple similarities may be determined, and the similarity is determined as the similarity between the first image frame and the second image frame.

Specifically, a process of determining the target similarity may be indicated according to Equation 7:

$$\text{SSIM} = \min(\text{SSIM}_1, \text{SSIM}_2, \text{SSIM}_3, \text{SSIM}_4, \text{SSIM}_5, \text{SSIM}_6) \quad \text{Equation 7}$$

$\text{SSIM}_j$ indicates the average value of the SSIM values of all the convolution kernels of the $j^{th}$ image blocks in the first image frame and the second image frame, and is also the SSIM value of the $j^{th}$ image blocks. SSIM indicates an SSIM value between the first image frame and the second image frame.

It may be understood that, in some rendering scenarios, although the observation point location corresponding to the first image frame is the same as the observation point location corresponding to the second image frame, because a dynamic object in the three-dimensional model moves, image content of the first image frame is different from image content of the second image frame. For example, if the image content corresponding to the first image frame is a near building and a distant sky, the image content of the second image frame may be a near building, a distant sky, and a bird in the sky because a bird in the three-dimensional model moves, that is, the image content of the second image frame includes the bird. Generally, when the bird in the second image frame occupies a small area in the second image frame, a high similarity value is obtained when a similarity between the entire first image frame and the entire second image frame is calculated, that is, the first image frame and the second image frame are substantially very similar. However, an image frame (namely, the second image frame) in which a new dynamically changing object appears is usually an important image frame, and usually needs to be reflected in continuously displayed images. Therefore, in this case, if the similarity between the first image frame and the second image frame is directly calculated, a final similarity obtained through calculation may be high, and the second image frame is multiplexed. As a result, a process in which an object dynamically changes cannot be reflected in the displayed images, for example, a process in which a bird flies in a sky cannot be reflected.

Based on this, in this solution, an image frame is divided into multiple image blocks, a similarity between each group of image blocks in two image frames is separately calculated, and a similarity corresponding to a group of image blocks with a lowest similarity in multiple groups of image blocks is used as a final similarity, so that a change of a dynamic object occurring in the image frame can be highlighted, and a slight but important change that occurs in the image frame can be reflected in the similarity between the two image frames. In this way, the electronic device finally determines to execute a rendering instruction, and performs rendering to obtain a new image frame, thereby ensuring continuity of images.

For ease of understanding, the following describes in detail an image frame rendering method provided in embodiments of this application with reference to a specific example.

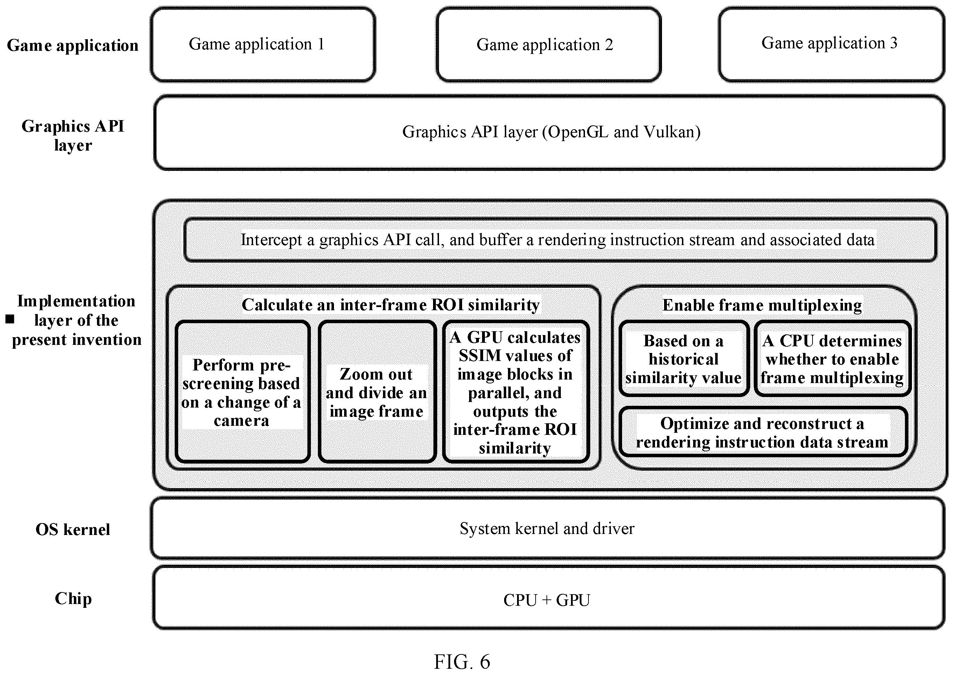

Refer to FIG. 6. FIG. 6 is a schematic diagram of a system architecture according to an embodiment of this application. As shown in FIG. 6, multiple applications such as a game application 1, a game application 2, and a game application 3 may run at an application layer. A graphics application programming interface (Application Programming Interface, API) layer may run a driver that can draw a graph, such as opengl and vulkan. An instruction reordering layer (namely, an implementation layer of the present invention) is configured to execute the foregoing image frame rendering method. An operating system (operating system, OS) inner kernel layer includes a system kernel and a related driver that is configured to drive a hardware chip. A chip layer includes hardware chips such as a CPU and a GPU.

The instruction reordering layer includes an instruction interception module, an inter-frame range of image (Range of Image, ROI) similarity calculation module, and a frame multiplexing enabling module. The instruction interception module is configured to intercept a graphics API call instruction, and buffer a rendering instruction stream and associated data. The inter-frame ROI similarity calculation module is configured to perform pre-screening based on a change of a camera location in the instruction stream, and determine image frames whose similarity needs to be calculated; and zoom out and divide an image frame, trigger the GPU to calculate SSIM values of image blocks in parallel, and output an inter-frame ROI similarity. The frame multiplexing enabling module is configured to determine, based on a historical similarity value, whether to enable frame multiplexing, and optimize and reconstruct a rendering instruction data stream based on a decision result.

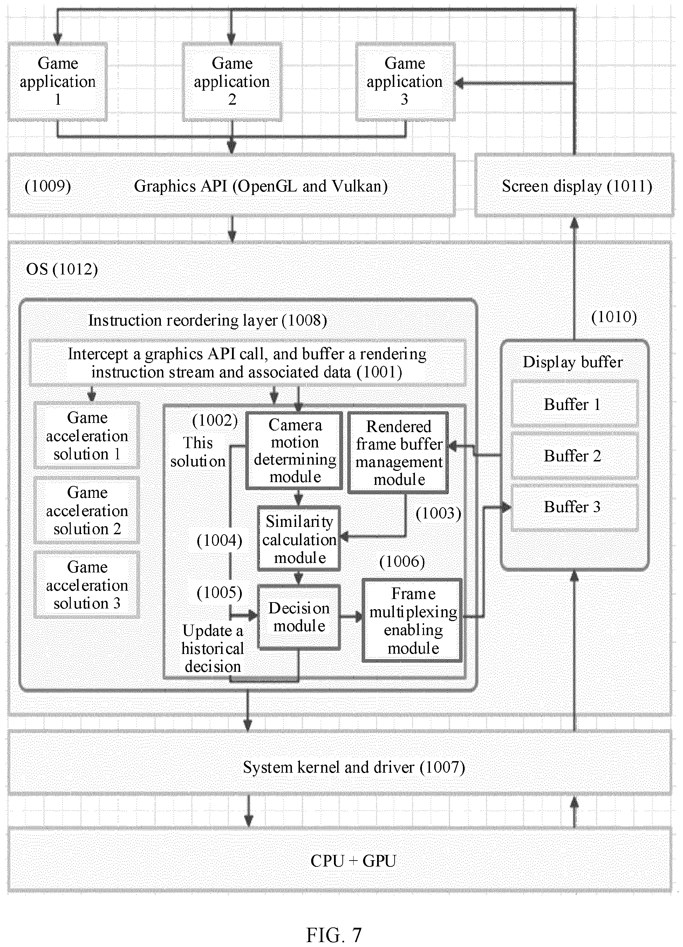

Refer to FIG. 7. FIG. 7 is a schematic diagram of an architecture of a system component according to an embodiment of this application. As shown in FIG. 7, the image frame rendering method provided in this embodiment may be embedded into an instruction reordering layer component of an OS in a form of software. In an entire OS framework, modules involved in this embodiment include a system kernel and driver module (1007), an instruction reordering layer module (1008), a graphics API module (1009), a display buffer module (1010), and a screen display module (1011). In the instruction reordering layer module (1008), in this embodiment, a graphics API interception module (1001) is modified, and a camera motion module (1002), a rendered frame buffer management module (1003), a similarity calculation module (1004), a decision module (1005), and a frame multiplexing enabling module (1006) are added.

The following describes in detail working principles of the modified and newly added modules in this embodiment with reference to a specific flowchart.

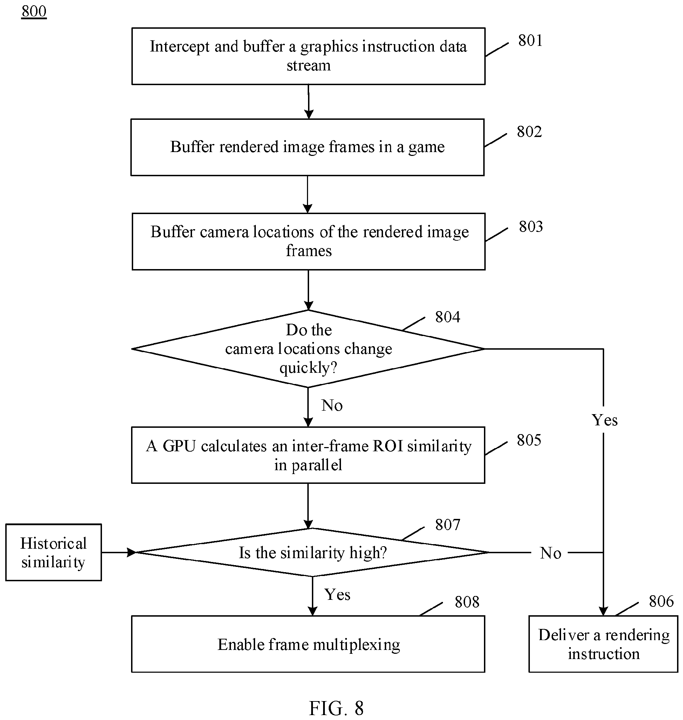

Refer to FIG. 8. FIG. 8 is a schematic flowchart of an image frame rendering method 800 according to an embodiment of this application. As shown in FIG. 8, the image frame rendering method 800 includes the following steps 801 to 808.

Step 801: Intercept and buffer a graphics instruction data stream.

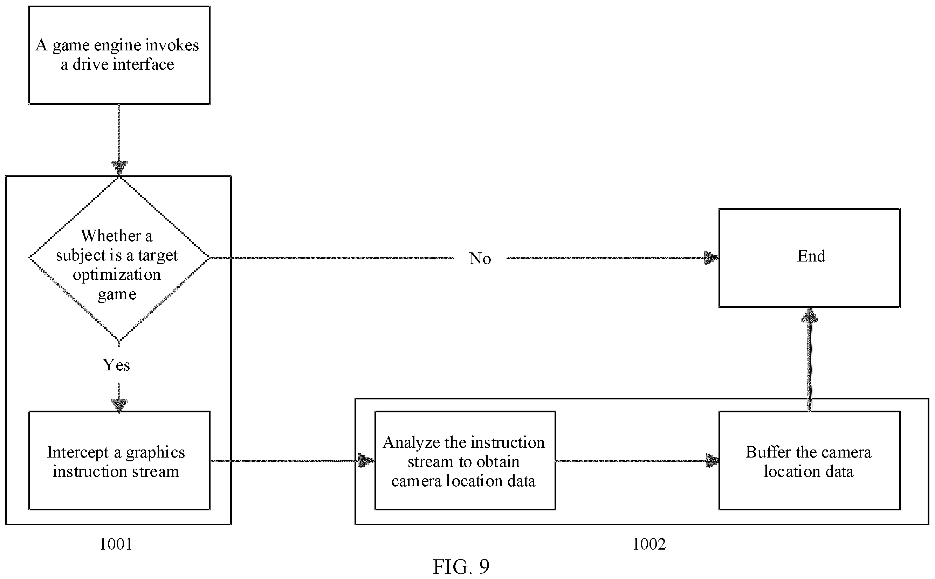

Refer to FIG. 9. FIG. 9 is a schematic flowchart of intercepting a graphics instruction data stream according to an embodiment of this application. As shown in FIG. 9, before a game engine invokes a driver layer instruction by delivering a graphics instruction, the graphics API interception module (1001) determines whether a subject that delivers the graphics instruction is a target optimization game. If the subject that delivers a drive instruction is not the target optimization game, the method procedure is not executed; or if the subject that delivers a drive instruction is the target optimization game, all graphics instructions are intercepted and buffered as an instruction stream. The graphics instruction is used to invoke the driver layer instruction to trigger the GPU to render image frames. Some graphics instructions include location information of a camera in a drawing process. An electronic device may analyze the instruction stream to obtain the location information of the camera, and buffer the location information of the camera for subsequent use.

Step 802: Buffer the rendered image frames in the game.

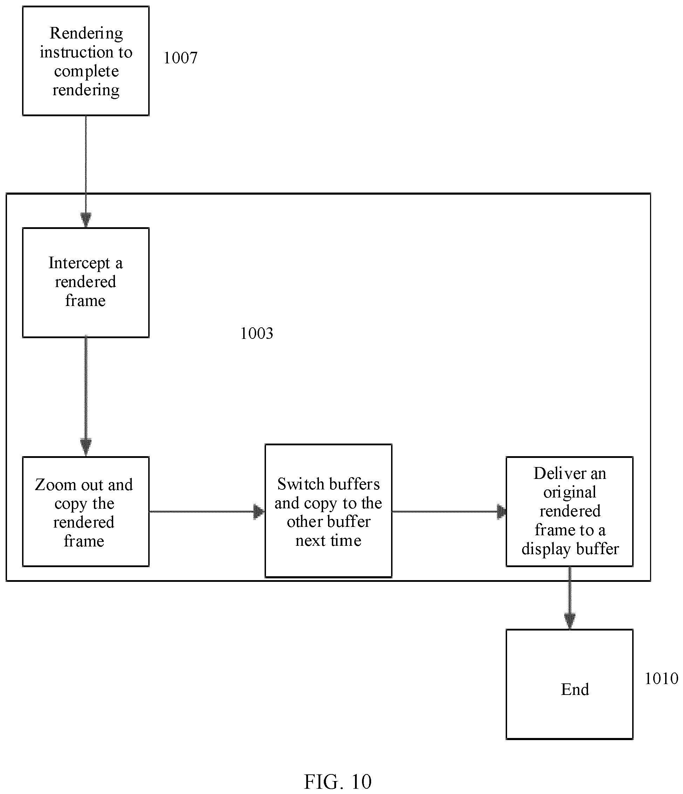

Refer to FIG. 10. FIG. 10 is a schematic flowchart of intercepting and buffering a rendered frame according to an embodiment of this application. As shown in FIG. 10, after the system kernel and driver (1007) delivers a rendering instruction to the GPU to complete rendering and generate rendered frames (for example, the foregoing first image frame and the foregoing second image frame), the rendered frame buffer management module (1003) intercepts and zooms out the rendered frames before the rendered frames are placed in a display buffer, and stores a copy. A purpose of zooming out the rendered frames is to reduce power consumption of subsequent similarity calculation. In the rendered frame buffer management module, there are two buffers for buffering the rendered frames. Each time after a buffer stores a rendered frame, the other buffer is used for next storage. In this way, the two buffers alternately store the rendered frames, to reduce storage space. In addition, after the rendered frames are stored, an original intercepted rendered frame is delivered to the display buffer. That is, an entire process is completed.

Step 803: Buffer camera locations of the rendered image frames.

In addition, for the rendered frames buffered in the buffers, the camera locations corresponding to these rendered frames may be further buffered.

Step 804: Do the camera locations change quickly?

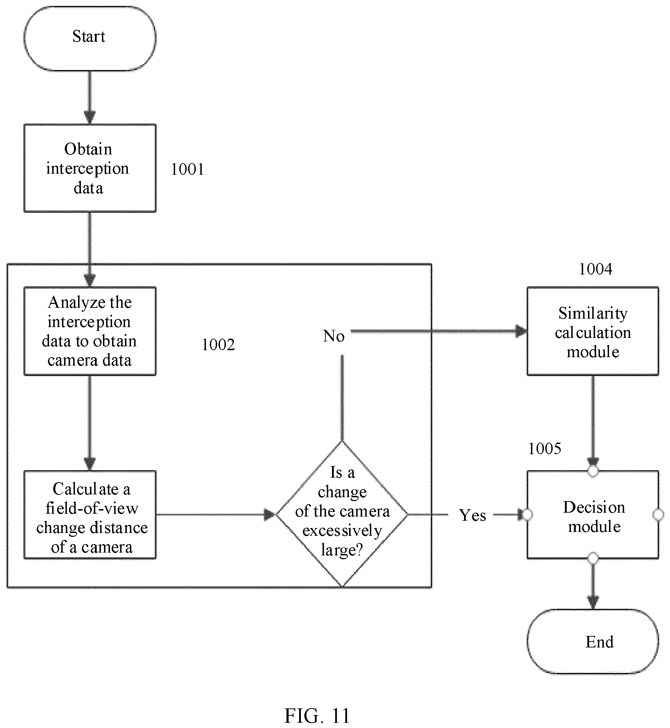

Refer to FIG. 11. FIG. 11 is a schematic flowchart of calculating a distance between camera locations according to an embodiment of this application. As shown in FIG. 11, the camera motion module (1002) obtains the camera locations buffered in the foregoing step, namely, the camera locations corresponding to the rendered frames obtained through rendering and camera locations in the rendering instruction, and then determines whether the camera locations change quickly by calculating a distance between the buffered camera locations and comparing the distance with a second threshold. If the distance is greater than the second threshold, it indicates that the camera locations change quickly; or if the distance is less than or equal to the second threshold, it indicates that the camera locations do not change quickly.

If the camera locations change quickly, it indicates scenarios in which motions currently change quickly. In these scenarios, a similarity between two adjacent image frames is generally not high. Therefore, similarity calculation is skipped in these scenarios, to reduce overheads. That is, if the camera locations change quickly, step 806 is performed to deliver a rendering instruction, to implement rendering of an image frame.

If the camera locations do not change quickly, it indicates scenarios in which motions do not currently change quickly. Therefore, similarity calculation may be further performed on the image frames.

Step 805: The GPU calculates an inter-frame ROI similarity in parallel.

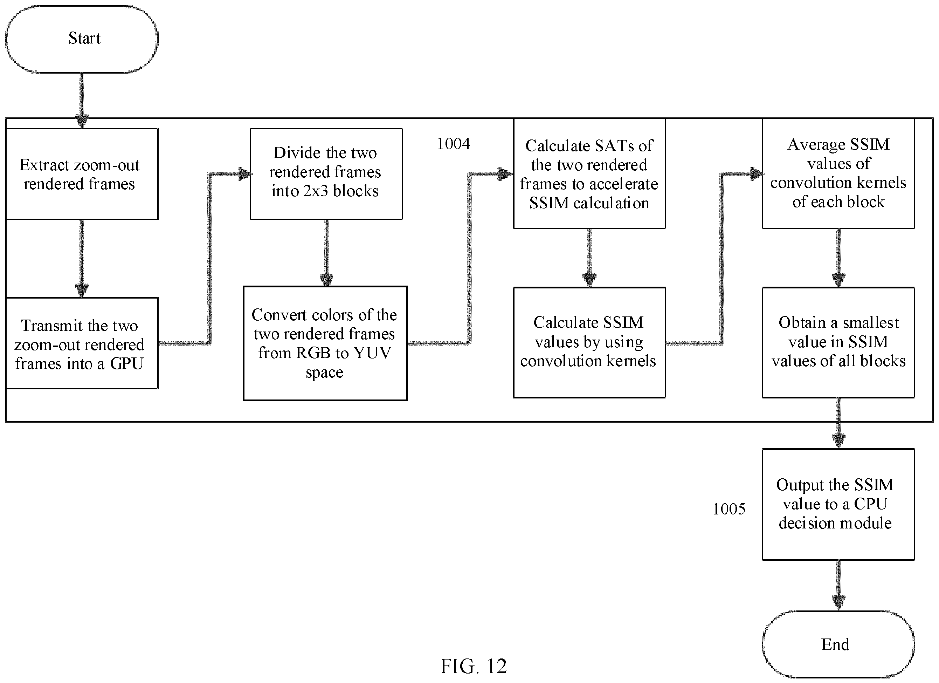

Refer to FIG. 12. FIG. 12 is a schematic flowchart of calculating a similarity between image frames according to an embodiment of this application. As shown in FIG. 12, a process of calculating a similarity between image frames is executed in the similarity calculation module (1004). First, two rendered frames that are zoomed out and buffered are extracted from the buffers, and the two zoom-out rendered frames are transmitted into the GPU. Then, the two zoom-out rendered frames are both divided into 2x3 image blocks, to form six groups of image blocks, where each group of image blocks includes one image block in each of the two zoom-out rendered frames. In addition, color space of the six groups of image blocks is converted from RGB color space to YUV color space, to facilitate subsequent calculation of SSIM values. Then, SATs of the two zoom-out rendered frames are calculated, to subsequently accelerate SSIM calculation. Finally, SSIM values of each group of image blocks are calculated by using convolution kernels. The SSIM values obtained through calculation by using all the convolution kernels corresponding to each group of image blocks are averaged, to obtain an SSIM value corresponding to each group of image blocks. A smallest SSIM value in SSIM values corresponding to all the groups of image blocks is used as the similarity between the two rendered frames. After the similarity between the two rendered frames is obtained, the similarity between the two rendered frames is sent to the decision module, to determine a subsequent rendering manner.

For ease of understanding, a SAT for accelerating SSIM calculation is described below with reference to the accompanying drawings.

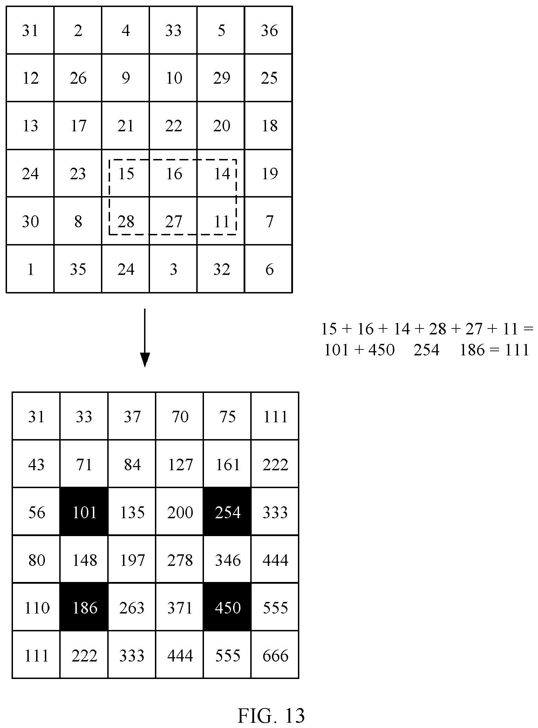

Refer to FIG. 13. FIG. 13 is a schematic diagram of a SAT according to an embodiment of this application. An image actually includes many pixels, and each pixel may be abstracted as a value. In this solution, a value obtained by abstracting each pixel is a Y value in YUV space. As shown in FIG. 13, an upper figure in FIG. 13 indicates a value of each pixel in an image, and a lower figure in FIG. 13 is a SAT corresponding to the image. The SAT is a graph formed by accumulating all pixel values in a rectangle formed from a pixel in an upper left corner to a current pixel. For example, 101 in the SAT is obtained by accumulating values of all pixels in the upper left corner of the location, that is, 31 + 2 + 12 + 26 + 13 + 17 = 101.

An advantage of the SAT is as follows: If a value of 15 + 16 + 14 + 28 + 27 + 11 in a block in the upper figure in FIG. 13 needs to be calculated, a same value, that is, 15 + 16 + 14 + 28 + 27 + 11 = 101 + 450 - 254 - 186 = 111, can be obtained by performing calculation based on values of four corners. If the block in the upper figure in FIG. 13 is larger, a large calculation amount may be saved. For example, if the convolution kernels are 7x7, value summation usually needs to be performed 49 times. In this case, calculation overheads of 49 - 4 = 45 times can be saved. Certainly, in actual use, overheads of generating a SAT also need to be considered. However, overall the generated SAT can still reduce a similarity calculation amount.

Step 806: Deliver a rendering instruction.

In this step, if the decision module (1005) determines not to perform frame multiplexing, the rendering instruction is delivered to the GPU, so that the GPU implements rendering of a target image frame based on the rendering instruction.

Step 807: Determine whether the inter-frame ROI similarity is high.

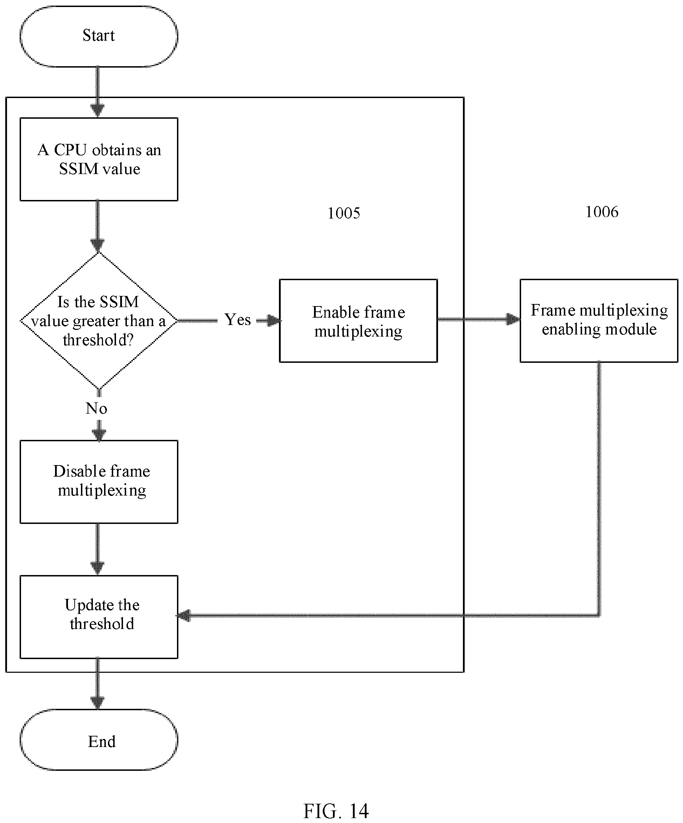

Refer to FIG. 14. FIG. 14 is a schematic flowchart of determining a similarity according to an embodiment of this application. As shown in FIG. 14, after the SSIM value of the two rendered frames is output in step 805, the decision module (1005) needs to determine whether the SSIM value is greater than a similarity threshold. If the SSIM value is greater than or equal to the similarity threshold, it indicates that the similarity between the two rendered frames is high, and it is decided to enable frame multiplexing; or if the SSIM value is less than the similarity threshold, it indicates that the similarity between the two rendered frames is not high, and it is decided not to enable frame multiplexing.

In a case of a high frame rate (for example, the frame rate is greater than 30 FPS), an inter-frame similarity cannot be quickly changed by a manual operation of a person. Therefore, the inter-frame similarity has continuity in time domain, as shown in FIG. 4. Therefore, the similarity threshold needs to be determined based on this feature in decision making. If frame multiplexing is enabled last time, the similarity threshold should be a difference between a reference threshold and 0.005. That is, there is a higher probability that frame multiplexing is enabled this time. If frame multiplexing is not enabled last time, a probability that frame multiplexing is enabled for a current frame is small, and the threshold is a reference threshold and remains unchanged, where the reference threshold may be 0.99. By default, an initial decision is that frame multiplexing is not enabled.

Step 808: Enable frame multiplexing.

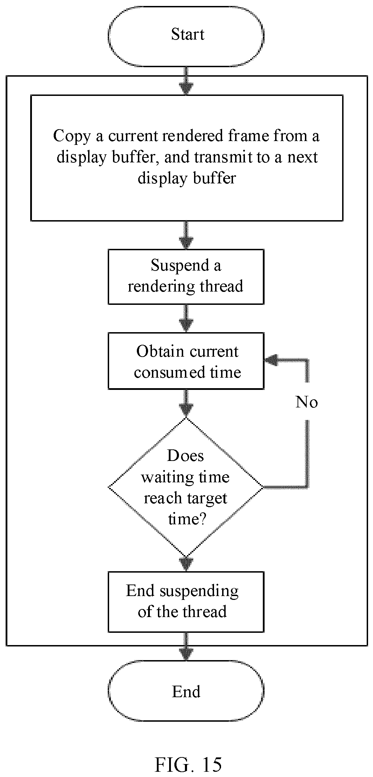

Refer to FIG. 15. FIG. 15 is a schematic flowchart of enabling frame multiplexing according to an embodiment of this application. This step is implemented in the frame multiplexing enabling module (1006). First, a current rendered frame is copied from the display buffer, and is transmitted to a location at which a next display obtains a value from the display buffer, to implement frame multiplexing. Then, a rendering thread is suspended, time consumed from an end of a previous frame to current time is calculated. Consumed time obtained through calculation is subtracted from display duration of two image frames to obtain time consumed for suspending the rendering thread, to delay delivery of a rendering instruction stream of a next frame.

It can be learned from the foregoing method that, compared with an existing related technology, in this solution, whether frame multiplexing needs to be enabled can be determined by using only two continuous rendered frames. This does not require labor costs and saves a large amount of labor costs. In addition, decision based on a similarity between two image frames complies with a human visual perception habit, and a scene recognition rate can be well ensured.

Second, this solution depends on only two rendered frames, which means that this solution does not depend on a platform or a game, to ensure that this solution can be transplanted to any platform or any game application, and has high transportability and universality.

In addition, this solution can dynamically adjust a threshold based on user experience in different scenarios, thereby increasing a gain and increasing a proportion of frame multiplexing enabling. In addition, the frame multiplexing technology that avoids an error in an image is selected, to solve a problem that a frame insertion technical solution is prone to causing a vertigo.

Based on the embodiments corresponding to FIG. 1 to FIG. 15, to better implement the foregoing solutions in embodiments of this application, the following further provides a related device configured to implement the foregoing solutions.

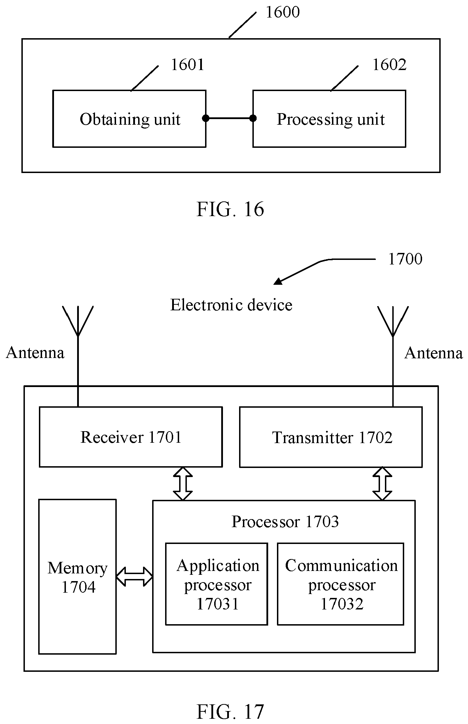

Specifically, refer to FIG. 16. FIG. 16 is a schematic diagram of a structure of an apparatus 1600 according to an embodiment of this application. The data processing apparatus 1600 includes an obtaining unit 1601 and a processing unit 1602. The obtaining unit 1601 is configured to obtain a first rendering instruction, where the first rendering instruction instructs to render a first target image frame. The obtaining unit 1601 is further configured to obtain a first image frame and a second image frame based on the first rendering instruction, the first image frame is a previous frame of the second image frame, and the second image frame is a previous frame of the first target image frame. The processing unit 1602 is configured to: if a similarity between the first image frame and the second image frame is greater than or equal to a first threshold, obtain the first target image frame based on the second image frame, where content of the first target image frame is the same as content of the second image frame.

In a possible implementation, the first rendering instruction includes a first observation point location in a to-be-rendered three-dimensional model; and the processing unit 1602 is further configured to: obtain a second observation point location corresponding to the second image frame, where the second image frame is obtained by rendering the three-dimensional model based on the second observation point location; and if a distance between the first observation point location and the second observation point location is less than or equal to a second threshold, determine the similarity between the first image frame and the second image frame.

In a possible implementation, the obtaining unit 1601 is further configured to obtain a second rendering instruction, the second rendering instruction instructs to render a second target image frame, and the second rendering instruction includes a third observation point location in the to-be-rendered three-dimensional model; the obtaining unit 1601 is further configured to obtain a third image frame, a fourth image frame, and a fourth observation point location corresponding to the fourth image frame based on the second rendering instruction, the third image frame is a previous frame of the fourth image frame, the fourth image frame is a previous frame of the second target image frame, and the fourth image frame is obtained by rendering the three-dimensional model based on the fourth observation point location; and the processing unit 1602 is further configured to: if a distance between the third observation point location and the fourth observation point location is greater than the second threshold, execute the second rendering instruction to obtain the second target image frame through rendering; or if a distance between the third observation point location and the fourth observation point location is less than or equal to the second threshold, and a similarity between the third image frame and the fourth image frame is less than the first threshold, execute the second rendering instruction to obtain the second target image frame through rendering.

In a possible implementation, the processing unit 1602 is specifically configured to: separately divide the first image frame and the second image frame into multiple image blocks, to obtain multiple first image blocks corresponding to the first image frame and multiple second image blocks corresponding to the second image frame, where the multiple first image blocks are in a one-to-one correspondence with the multiple second image blocks; separately calculate similarities between image blocks having correspondences in the multiple first image blocks and the multiple second image blocks, to obtain multiple similarities; and determine a target similarity in the multiple similarities as the similarity between the first image frame and the second image frame, where the target similarity is a similarity with a smallest value in the multiple similarities.

In a possible implementation, the first threshold is determined based on a third threshold, and the third threshold is a preset fixed value; and if a third target image frame is obtained through rendering, the first threshold is the same as the third threshold, the third target image frame is located before the first target image frame, and a rendering manner of the third target image frame is determined based on a similarity between image frames; or if a third target image frame is obtained by multiplexing an image frame, the first threshold is a difference between the third threshold and a fourth threshold, and the fourth threshold is a preset fixed value.

In a possible implementation, the processing unit 1602 is further configured to: determine target duration, where the target duration is a difference between display duration of two image frames and duration of the first target image frame obtained through calculation; and stop running a rendering thread, where duration in which the rendering thread does not run is target time, and the rendering thread is configured to perform rendering based on a rendering instruction to obtain an image frame.

In a possible implementation, the processing unit 1602 is specifically configured to: perform zoom-out processing on the first image frame and the second image frame to obtain a zoom-out first image frame and a zoom-out second image frame; and calculate a similarity between the zoom-out first image frame and the zoom-out second image frame, to obtain the similarity between the first image frame and the second image frame.

The following describes an electronic device provided in an embodiment of this application. Refer to FIG. 17. FIG. 17 is a schematic diagram of a structure of an electronic device according to an embodiment of this application. An electronic device 1700 may be specifically a mobile phone, a tablet computer, a laptop computer, a smart wearable device, a server, or the like. This is not limited herein. A sound processing apparatus described in the embodiment corresponding to FIG. 11 may be deployed on the electronic device 1700, to implement a sound processing function in the embodiment corresponding to FIG. 11. Specifically, the electronic device 1700 includes a receiver 1701, a transmitter 1702, a processor 1703, and a memory 1704 (there may be one or more processors 1703 in the electronic device 1700, and one processor is used as an example in FIG. 17). The processor 1703 may include an application processor 17031 and a communication processor 17032. In some embodiments of this application, the receiver 1701, the transmitter 1702, the processor 1703, and the memory 1704 may be connected through a bus or in another manner.

The memory 1704 may include a read-only memory and a random access memory, and provide instructions and data for the processor 1703. A part of the memory 1704 may further include a non-volatile random access memory (non-volatile random access memory, NVRAM). The memory 1704 stores a processor and operation instructions, an executable module or a data structure, a subnet thereof, or an expanded set thereof. The operation instructions may include various operation instructions, to implement various operations.

The processor 1703 controls an operation of the electronic device. During specific application, components of the electronic device are coupled together through a bus system. In addition to a data bus, the bus system may further include a power bus, a control bus, a status signal bus, and the like. However, for clear description, various types of buses in the figure are referred to as the bus system.

The method disclosed in the foregoing embodiments of this application may be applied to the processor 1703, or may be implemented by the processor 1703. The processor 1703 may be an integrated circuit chip, and has a signal processing capability. In an implementation process, steps in the foregoing methods may be implemented by using a hardware integrated logical circuit in the processor 1703, or by using instructions in a form of software. The foregoing processor 1703 may be a general-purpose processor, a digital signal processor (digital signal processor, DSP), a microprocessor, or a microcontroller. The processor 1703 may further include an application-specific integrated circuit (application-specific integrated circuit, ASIC), a field-programmable gate array (field-programmable gate array, FPGA) or another programmable logic device, a discrete gate, a transistor logic device, or a discrete hardware component. The processor 1703 may implement or perform the methods, the steps, and the logical block diagrams disclosed in embodiments of this application. The general-purpose processor may be a microprocessor, or the processor may be any conventional processor or the like. Steps of the methods disclosed with reference to embodiments of this application may be directly performed and completed by a hardware decoding processor, or may be performed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 1704, and the processor 1703 reads information in the memory 1704 and completes the steps in the foregoing methods in combination with hardware in the processor 1703.

The receiver 1701 may be configured to: receive input digital or character information, and generate a signal input related to setting and function control of the electronic device. The transmitter 1702 may be configured to output the digital or character information through a first interface. The transmitter 1702 may further be configured to send instructions to a disk group through the first interface, to modify data in the disk group. The transmitter 1702 may further include a display device such as a display.

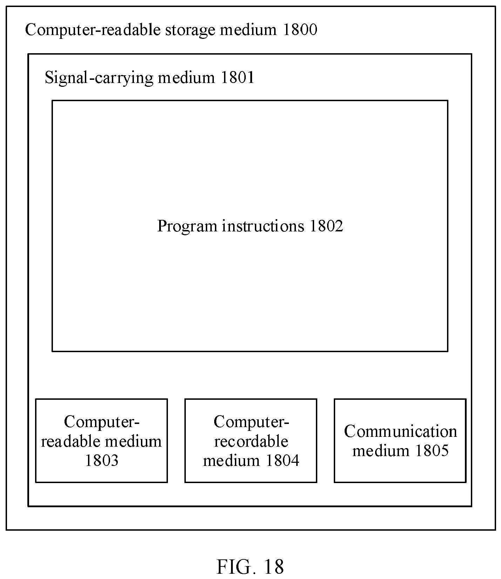

Refer to FIG. 18. This application further provides a computer-readable storage medium. In some embodiments, the method disclosed in FIG. 3 may be implemented as computer program instructions encoded in a machine-readable format on a computer-readable storage medium or encoded on another non-transitory medium or product.

FIG. 18 schematically shows a conceptual partial view of an example computer-readable storage medium arranged according to at least some of embodiments shown herein. The example computer-readable storage medium includes a computer program for executing a computer process on a computing device.

In an embodiment, a computer-readable storage medium 1800 is provided by using a signal-carrying medium 1801. The signal-carrying medium 1801 may include one or more program instructions 1802. When the program instructions 1802 are run by one or more processors, the functions or some of the functions described for FIG. 5 may be provided. In addition, the program instructions 1802 in FIG. 18 also describe example instructions.

In some examples, the signal-carrying medium 1801 may include a computer-readable medium 1803, for example, but not limited to, a hard disk drive, a compact disk (CD), a digital video disc (DVD), a digital tape, a memory, a ROM, or a RAM.

In some implementations, the signal-carrying medium 1801 may include a computer-recordable medium 1804, for example, but not limited to, a memory, a read/write (R/W) CD, or a R/W DVD. In some implementations, the signal-carrying medium 1801 may include a communication medium 1805, for example, but not limited to, a digital and/or analog communication medium (for example, an optical fiber cable, a waveguide, a wired communication link, or a wireless communication link). Therefore, for example, the signal-carrying medium 1801 may be conveyed by the communication medium 1805 in a wireless form (for example, a wireless communication medium that complies with the IEEE 802 standard or another transmission protocol).

The one or more program instructions 1802 may, for example, be computer-executable instructions or logic implementation instructions. In some examples, a computing device may be configured to provide various operations, functions, or actions in response to the program instructions 1802 transmitted to the computing device by using one or more of the computer-readable medium 1803, the computer-recordable medium 1804, and/or the communication medium 1805.

It should be understood that, the arrangement described herein is merely used as an example. Therefore, a person skilled in the art will understand that, another arrangement and another element (for example, a machine, an interface, a function, a sequence, and a functional group) can alternatively be used, and some elements may be omitted together based on a desired result. In addition, many of the described elements are functional entities that can be implemented as discrete or distributed components, or implemented in any suitable combination at any suitable position in combination with another component.

It may be clearly understood by a person skilled in the art that, for the purpose of convenient and brief description, for a detailed working process of the foregoing system, apparatus, and units, reference may be made to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division of units is merely logical function division and may be other division in actual implementation. For example, multiple units or components may be combined or integrated into another system, or some features may be ignored or may not be performed. In addition, the displayed or discussed mutual couplings or direct couplings or communication connections may be implemented through some interfaces. The indirect couplings or communication connections between apparatuses or units may be implemented in electrical, mechanical, or other forms.

The units described as separate parts may or may not be physically separate, and parts displayed as units may or may not be physical units, may be located in one position, or may be distributed on multiple network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The foregoing integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or a part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory, a random access memory, a magnetic disk, or an optical disc.

**Claims**

1. An image frame rendering method, comprising:

   obtaining a first rendering instruction, wherein the first rendering instruction instructs to render a first target image frame;
   obtaining a first image frame and a second image frame based on the first rendering instruction, wherein the first image frame is a previous frame of the second image frame, and the second image frame is a previous frame of the first target image frame; and
   if a similarity between the first image frame and the second image frame is greater than or equal to a first threshold, obtaining the first target image frame based on the second image frame, wherein content of the first target image frame is the same as content of the second image frame.

2. The method according to claim 1, wherein the first rendering instruction comprises a first observation point location in a to-be-rendered three-dimensional model; and
   the method further comprises:

   obtaining a second observation point location corresponding to the second image frame, wherein the second image frame is obtained by rendering the three-dimensional model based on the second observation point location; and
   if a distance between the first observation point location and the second observation point location is less than or equal to a second threshold, determining the similarity between the first image frame and the second image frame.

3. The method according to claim 1 or 2, wherein the method further comprises:

   obtaining a second rendering instruction, wherein the second rendering instruction instructs to render a second target image frame, and the second rendering instruction comprises a third observation point location in the to-be-rendered three-dimensional model;
   obtaining a third image frame, a fourth image frame, and a fourth observation point location corresponding to the fourth image frame based on the second rendering instruction, wherein the third image frame is a previous frame of the fourth image frame, the fourth image frame is a previous frame of the second target image frame, and the fourth image frame is obtained by rendering the three-dimensional model based on the fourth observation point location; and
   if a distance between the third observation point location and the fourth observation point location is greater than the second threshold, executing the second rendering instruction to obtain the second target image frame through rendering; or
   if a distance between the third observation point location and the fourth observation point location is less than or equal to the second threshold, and a similarity between the third image frame and the fourth image frame is less than the first threshold, executing the second rendering instruction to obtain the second target image frame through rendering.

4. The method according to any one of claims 1 to 3, wherein the method further comprises:

   separately dividing the first image frame and the second image frame into multiple image blocks, to obtain multiple first image blocks corresponding to the first image frame and multiple second image blocks corresponding to the second image frame, wherein the multiple first image blocks are in a one-to-one correspondence with the multiple second image blocks;

separately calculating similarities between image blocks having correspondences in the multiple first image blocks and the multiple second image blocks, to obtain multiple similarities; and

determining a target similarity in the multiple similarities as the similarity between the first image frame and the second image frame, wherein the target similarity is a similarity with a smallest value in the multiple similarities.

5. The method according to any one of claims 1 to 4, wherein the first threshold is determined based on a third threshold, and the third threshold is a preset fixed value; and

if a third target image frame is obtained through rendering, the first threshold is the same as the third threshold, the third target image frame is located before the first target image frame, and a rendering manner of the third target image frame is determined based on a similarity between image frames; or

if a third target image frame is obtained by multiplexing an image frame, the first threshold is a difference between the third threshold and a fourth threshold, and the fourth threshold is a preset fixed value.

6. The method according to any one of claims 1 to 5, wherein the method further comprises:

determining target duration, wherein the target duration is a difference between display duration of two image frames and duration of the first target image frame obtained through calculation; and

stopping running a rendering thread, wherein duration in which the rendering thread does not run is the target time, and the rendering thread is configured to perform rendering based on a rendering instruction to obtain an image frame.

7. The method according to any one of claims 1 to 6, wherein the method further comprises:

performing zoom-out processing on the first image frame and the second image frame to obtain a zoom-out first image frame and a zoom-out second image frame; and

calculating a similarity between the zoom-out first image frame and the zoom-out second image frame, to obtain the similarity between the first image frame and the second image frame.

8. A rendering apparatus, comprising:

an obtaining unit, configured to obtain a first rendering instruction, wherein the first rendering instruction instructs to render a first target image frame; and

the obtaining unit is further configured to obtain a first image frame and a second image frame based on the first rendering instruction, the first image frame is a previous frame of the second image frame, and the second image frame is a previous frame of the first target image frame; and

a processing unit, configured to: if a similarity between the first image frame and the second image frame is greater than or equal to a first threshold, obtain the first target image frame based on the second image frame, wherein content of the first target image frame is the same as content of the second image frame.

9. The apparatus according to claim 8, wherein the first rendering instruction comprises a first observation point location in a to-be-rendered three-dimensional model; and

the processing unit is further configured to:

obtain a second observation point location corresponding to the second image frame, wherein the second image frame is obtained by rendering the three-dimensional model based on the second observation point location; and

if a distance between the first observation point location and the second observation point location is less than or equal to a second threshold, determine the similarity between the first image frame and the second image frame.

10. The apparatus according to claim 8 or 9, wherein

the obtaining unit is further configured to obtain a second rendering instruction, the second rendering instruction instructs to render a second target image frame, and the second rendering instruction comprises a third observation point location in the to-be-rendered three-dimensional model;

the obtaining unit is further configured to obtain a third image frame, a fourth image frame, and a fourth observation point location corresponding to the fourth image frame based on the second rendering instruction, the third image frame is a previous frame of the fourth image frame, the fourth image frame is a previous frame of the second target image frame, and the fourth image frame is obtained by rendering the three-dimensional model based on the fourth observation point location; and

the processing unit is further configured to: if a distance between the third observation point location and the fourth observation point location is greater than the second threshold, execute the second rendering instruction to obtain the second target image frame through rendering; or

if a distance between the third observation point location and the fourth observation point location is less than or equal to the second threshold, and a similarity between the third image frame and the fourth image frame is less than the first threshold, execute the second rendering instruction to obtain the second target image frame through rendering.

11. The apparatus according to any one of claims 8 to 10, wherein the processing unit is specifically configured to:

separately divide the first image frame and the second image frame into multiple image blocks, to obtain multiple first image blocks corresponding to the first image frame and multiple second image blocks corresponding to the second image frame, wherein the multiple first image blocks are in a one-to-one correspondence with the multiple second image blocks;

separately calculate similarities between image blocks having correspondences in the multiple first image blocks and the multiple second image blocks, to obtain multiple similarities; and

determine a target similarity in the multiple similarities as the similarity between the first image frame and the second image frame, wherein the target similarity is a similarity with a smallest value in the multiple similarities.

12. The apparatus according to any one of claims 8 to 11, wherein the first threshold is determined based on a third threshold, and the third threshold is a preset fixed value; and

if a third target image frame is obtained through rendering, the first threshold is the same as the third threshold, the third target image frame is located before the first target image frame, and a rendering manner of the third target image frame is determined based on a similarity between image frames; or

if a third target image frame is obtained by multiplexing an image frame, the first threshold is a difference between the third threshold and a fourth threshold, and the fourth threshold is a preset fixed value.

13. The apparatus according to any one of claims 8 to 12, wherein the processing unit is further configured to:

determine target duration, wherein the target duration is a difference between display duration of two image frames and duration of the first target image frame obtained through calculation; and

stop running a rendering thread, wherein duration in which the rendering thread does not run is the target time, and the rendering thread is configured to perform rendering based on a rendering instruction to obtain an image frame.

14. The apparatus according to any one of claims 8 to 13, wherein the processing unit is specifically configured to:

perform zoom-out processing on the first image frame and the second image frame to obtain a zoom-out first image frame and a zoom-out second image frame; and

calculate a similarity between the zoom-out first image frame and the zoom-out second image frame, to obtain the similarity between the first image frame and the second image frame.

15. An electronic device, comprising a memory and a processor, wherein the memory stores code, the processor is configured to execute the code, and when the code is executed, the electronic device performs the method according to any one of claims 1 to 7.

16. A computer-readable storage medium, wherein the computer-readable storage medium stores instructions, and when the instructions are executed by a computer, the computer is enabled to perform the method according to any one of claims 1 to 7.

17. A computer program product, wherein the computer program product stores instructions, and when the instructions are executed by a computer, the computer is enabled to perform the method according to any one of claims 1 to 7.

Whether a user does not perform an operation for a long time

Yes

No

Do not perform multiplexing

Perform frame multiplexing

Whether the user does not operate 2D rendering

Yes

No

Do not perform multiplexing

Perform frame multiplexing

FIG. 1

EP 4 406 632 A1

101

133

Hard disk drive

131

Internal memory 135

103

Hard disk drive interface

OS 137

Processor

System bus 105

Shell 139

Kernel 141

111

Application program 143

Bus bridge

Video adapter

107

I/O BUS

115

125

129

I/O interface

USB port

Network interface

Display

109

Input device

External memory

Transceiver

117

121

123

Camera

155

127

Network

149

Software deployment server

FIG. 2

300

| Obtain a first rendering instruction, where the first rendering instruction instructs to render a first target image frame | 301 |

| Obtain a first image frame and a second image frame based on the first rendering instruction, where the first image frame is a previous frame of the second image frame, and the second image frame is a previous frame of the first target image frame | 302 |

| If a similarity between the first image frame and the second image frame is greater than or equal to a first threshold, obtain the first target image frame based on the second image frame, where content of the first target image frame is the same as content of the second image frame | 303 |

FIG. 3

Game application 1

Game application 2

Game application 3

FIG. 4

First image frame

Second image frame

Division

Division

| A1 | A2 | A3 |
| A4 | A5 | A6 |

Multiple first image blocks

| B1 | B2 | B3 |
| B4 | B5 | B6 |

Multiple second image blocks

FIG. 5

| Game application | Game application 1 | Game application 2 | Game application 3 |

| Graphics API layer | Graphics API layer (OpenGL and Vulkan) |

| Implementation ■ layer of the present invention | Intercept a graphics API call, and buffer a rendering instruction stream and associated data |

**Calculate an inter-frame ROI similarity**

| Perform pre-screening based on a change of a camera | Zoom out and divide an image frame | A GPU calculates SSIM values of image blocks in parallel, and outputs the inter-frame ROI similarity |

**Enable frame multiplexing**

| Based on a historical similarity value | A CPU determines whether to enable frame multiplexing |

Optimize and reconstruct a rendering instruction data stream

| OS kernel | System kernel and driver |

| Chip | CPU + GPU |

FIG. 6

FIG. 7

<u>800</u>

```
┌─────────────────────────────────────────┐
│ Intercept and buffer a graphics         │ ╱ 801
│ instruction data stream                 │
└─────────────────────────────────────────┘
                    │
                    ▼
┌─────────────────────────────────────────┐
│ Buffer rendered image frames in a game  │ ╱ 802
└─────────────────────────────────────────┘
                    │
                    ▼
┌─────────────────────────────────────────┐
│ Buffer camera locations of the          │ ╱ 803
│ rendered image frames                   │
└─────────────────────────────────────────┘
                    │
                    ▼
           ◇ Do the                         ╱ 804
           camera locations change ◇──────────────┐
           quickly?                                │
                    │ No                           │
                    ▼                           Yes │
┌─────────────────────────────────────────┐       │
│ A GPU calculates an inter-frame ROI     │ ╱ 805  │
│ similarity in parallel                  │        │
└─────────────────────────────────────────┘        │
                    │                              │
┌───────────┐       ▼                          807  │
│ Historical│──▶◇ Is the similarity high? ◇── No ───┤
│ similarity│                                       │
└───────────┘       │ Yes                           │
                    ▼          808            806   ▼
┌─────────────────────────────────────────┐    ┌──────────────┐
│ Enable frame multiplexing               │    │ Deliver a    │
└─────────────────────────────────────────┘    │ rendering    │
                                                │ instruction  │
                                                └──────────────┘
```

FIG. 8

A game engine invokes a drive interface

Whether a subject is a target optimization game

No → End

Yes

Intercept a graphics instruction stream

1001

Analyze the instruction stream to obtain camera location data

Buffer the camera location data

1002

FIG. 9

FIG. 10

FIG. 11

Start

Extract zoom-out rendered frames

Divide the two rendered frames into 2x3 blocks

1004

Calculate SATs of the two rendered frames to accelerate SSIM calculation

Average SSIM values of convolution kernels of each block

Transmit the two zoom-out rendered frames into a GPU

Convert colors of the two rendered frames from RGB to YUV space

Calculate SSIM values by using convolution kernels

Obtain a smallest value in SSIM values of all blocks

1005

Output the SSIM value to a CPU decision module

End

FIG. 12

| 31 | 2 | 4 | 33 | 5 | 36 |
|----|----|----|----|----|----|
| 12 | 26 | 9 | 10 | 29 | 25 |
| 13 | 17 | 21 | 22 | 20 | 18 |
| 24 | 23 | 15 | 16 | 14 | 19 |
| 30 | 8 | 28 | 27 | 11 | 7 |
| 1 | 35 | 24 | 3 | 32 | 6 |

$15 + 16 + 14 + 28 + 27 + 11 =$
$101 + 450 \quad 254 \quad 186 = 111$

| 31 | 33 | 37 | 70 | 75 | 111 |
|----|----|----|----|----|-----|
| 43 | 71 | 84 | 127 | 161 | 222 |
| 56 | 101 | 135 | 200 | 254 | 333 |
| 80 | 148 | 197 | 278 | 346 | 444 |
| 110 | 186 | 263 | 371 | 450 | 555 |
| 111 | 222 | 333 | 444 | 555 | 666 |

FIG. 13

Start

A CPU obtains an
SSIM value

1005

1006

Is the SSIM
value greater than a
threshold? —— Yes → Enable frame
multiplexing → Frame multiplexing
enabling module

No

Disable frame
multiplexing

Update the
threshold

End

FIG. 14

FIG. 15

1600

FIG. 16

1700

Electronic device

Antenna

Antenna

| Receiver 1701 | Transmitter 1702 |
|---|---|

Processor 1703

| Memory 1704 | Application processor 17031 | Communication processor 17032 |
|---|---|---|

FIG. 17

Computer-readable storage medium 1800

Signal-carrying medium 1801

Program instructions 1802

| Computer-readable medium 1803 | Computer-recordable medium 1804 | Communication medium 1805 |

FIG. 18

<div align="center">

### INTERNATIONAL SEARCH REPORT

</div>

| International application No. |
| --- |
| **PCT/CN2022/133959** |

**A. CLASSIFICATION OF SUBJECT MATTER**

A63F13/52(2014.01)i;G06T15/00(2011.01)i

According to International Patent Classification (IPC) or to both national classification and IPC

**B. FIELDS SEARCHED**

Minimum documentation searched (classification system followed by classification symbols)

IPC:A63F13,G06T15

Documentation searched other than minimum documentation to the extent that such documents are included in the fields searched

Electronic data base consulted during the international search (name of data base and, where practicable, search terms used)

VEN, CNTXT, CNABS, CNKI: image, render, instruction, video, frame, similarity, threshold, target, observation, position, time, 图像, 渲染, 指令, 视频, 帧, 相似, 阈值, 目标, 观察, 位置, 时长

**C. DOCUMENTS CONSIDERED TO BE RELEVANT**

| Category* | Citation of document, with indication, where appropriate, of the relevant passages | Relevant to claim No. |
| --- | --- | --- |
| X | CN 113473181 A (BEIJING SENSETIME SCIENCE TECH LTD.) 01 October 2021 (2021-10-01) description, paragraphs [0049]-[0068], and figures 1-12 | 1-17 |
| A | CN 110062176 A (BEIJING BYTEDANCE NETWORK TECHNOLOGY CO., LTD.) 26 July 2019 (2019-07-26) entire document | 1-17 |
| A | CN 111476273 A (XI'AN VANXVM ELECTRONICS TECHNOLOGY CO., LTD.) 31 July 2020 (2020-07-31) entire document | 1-17 |
| A | CN 111724293 A (HUAWEI TECHNOLOGIES CO., LTD.) 29 September 2020 (2020-09-29) entire document | 1-17 |
| A | CN 112422873 A (OPPO (CHONGQING) INTELLIGENT TECHNOLOGY CO., LTD.) 26 February 2021 (2021-02-26) entire document | 1-17 |
| A | US 10537799 B1 (ELECTRONIC ARTS INC.) 21 January 2020 (2020-01-21) entire document | 1-17 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 February 2023** | **17 February 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

| International application No. |
| --- |
| **PCT/CN2022/133959** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2017330496 A1 (UNITY IPR APS) 16 November 2017 (2017-11-16)<br>entire document | 1-17 |

Form PCT/ISA/210 (second sheet) (July 2022)

INTERNATIONAL SEARCH REPORT
Information on patent family members

International application No.

**PCT/CN2022/133959**

| Patent document cited in search report | | | Publication date (day/month/year) | Patent family member(s) | | | Publication date (day/month/year) |
|---|---|---|---|---|---|---|---|
| CN | 113473181 | A | 01 October 2021 | None | | | |
| CN | 110062176 | A | 26 July 2019 | None | | | |
| CN | 111476273 | A | 31 July 2020 | None | | | |
| CN | 111724293 | A | 29 September 2020 | None | | | |
| CN | 112422873 | A | 26 February 2021 | None | | | |
| US | 10537799 | B1 | 21 January 2020 | None | | | |
| US | 2017330496 | A1 | 16 November 2017 | US | 9940858 | B2 | 10 April 2018 |

Form PCT/ISA/210 (patent family annex) (July 2022)

**REFERENCES CITED IN THE DESCRIPTION**

**Patent documents cited in the description**

- CN 202111424170